# EUROPEAN PATENT APPLICATION

(11) **EP 4 297 515 A1**
(43) Date of publication of application: **27.12.2023**
(21) Application number: 22770282.6
(22) Date of filing: 25.02.2022
(51) Int. Cl.: H04W 74/00

(54) **METHOD AND APPARATUS FOR TRANSMITTING INFORMATION**

(30) Priority: 17.03.2021 CN 202110286882
(71) Applicant: Huawei Technologies Co., Ltd., Longgang Shenzhen, Guangdong 518129 (CN)
(72) Inventor: LIU, Zhe, Shenzhen, Guangdong 518129 (CN); YU, Zheng, Shenzhen, Guangdong 518129 (CN); WEN, Ronghui, Shenzhen, Guangdong 518129 (CN); ZHANG, Yongping, Shenzhen, Guangdong 518129 (CN)
(74) Representative: Isarpatent
(86) International application number: PCT/CN2022/077812
(87) International publication number: WO 2022/193927

(57) **Abstract**

This application provides an information transmission method and an apparatus. The information transmission method includes: A first terminal device determines a first resource based on a first reference point and a first bandwidth, where the first reference point is used to determine a location of the first resource, the first bandwidth is a size of the first resource, the size of the first resource is equal to or less than a maximum channel bandwidth supported by the first terminal device, and the first terminal device is a first-type terminal device. The first terminal device sends and/or receives information on the first resource. This resolves a problem of frequent switching of an operating frequency of a communication device in a network access process, effectively reduces power consumption of the communication device, and improves information transmission flexibility.

## Description

This application claims priority to Chinese Patent Application No. 202110286882.2, filed with the China National Intellectual Property Administration on March 17, 2021 and entitled "INFORMATION TRANSMISSION METHOD AND APPARATUS", which is incorporated herein by reference in its entirety.

### TECHNICAL FIELD

This application relates to the communication field, and in particular, to an information transmission method and an apparatus.

### BACKGROUND

In a process in which a communication device accesses a network device, two adjacent uplink sendings correspond to different operating frequencies, or two adjacent downlink receivings correspond to different operating frequencies. As a result, frequency tuning is performed for a service of the communication device between the adjacent uplink sendings, or frequency tuning is performed for a service of the communication device between the adjacent downlink receivings. Frequent switching of operating frequencies causes huge power consumption of the communication device.

### SUMMARY

This application provides an information transmission method and an apparatus, to avoid frequent switching of an operating frequency of a communication device, reduce power consumption, and improve information transmission flexibility.

According to a first aspect, an information transmission method is provided. The method may include: A first terminal device obtains first information, where the first information indicates M bandwidth resources, M is a positive integer, the first terminal device is a first-type terminal device, and a size of each of the M bandwidth resources is equal to or less than a maximum channel bandwidth supported by the first terminal device. The first terminal device obtains a first parameter, where the first parameter is a quantity of random access channel occasions for frequency division multiplexing in a time unit. The first terminal device determines a first bandwidth resource from the M bandwidth resources based on the first information and the first parameter. The first terminal device sends uplink information or receives downlink information on the first bandwidth resource.

The first information may be system information, for example, an SIB 1, and the first parameter may be carried in random access channel configuration information. The first terminal device is the first-type terminal device, and the first-type terminal device may be a reduced capability terminal device (reduced capability UE, REDCAP UE). Characteristics such as a bandwidth, a quantity of supported or configured resources, a quantity of transmit antenna ports and/or a quantity of receive antenna ports, a quantity of radio frequency channels, a quantity of hybrid automatic repeat request (hybrid automatic repeat request, HARQ) processes, a supported peak rate, a delay requirement, and a processing capability of the first-type terminal device are lower than those of a second-type terminal device (which may be legacy UE).

It should be understood that sizes of the M bandwidth resources may be the same or may be different. This is not limited in this application.

In the method, at least one bandwidth resource whose size is within a maximum bandwidth channel range supported by the first terminal device is configured, and the first terminal device determines the first bandwidth resource based on the first information and the first parameter. This can avoid frequent switching of an operating frequency of the first terminal device, and reduce power consumption.

With reference to the first aspect, in some implementations of the first aspect, a value of the first parameter is greater than 4, and
when M=1, the bandwidth resources are the first bandwidth resource, the first bandwidth resource includes predefined resources of N random access channel occasions, the random access channel occasions whose quantity is the first parameter include the N random access channel occasions, and N is a positive integer; or
when M=1, the bandwidth resources are the first bandwidth resource, a start resource block of the first bandwidth resource is the same as a start resource block of a first random access channel occasion, and the first random access channel occasion is indicated by first indication information; or
when M> 1, each of the M bandwidth resources includes a resource corresponding to at least one random access channel occasion.

With reference to the first aspect, in some implementations of the first aspect, the value of the first parameter is 8, indexes of the random access channel occasions sorted in a first order are 0 to 7, and the first order includes an ascending order of frequencies.

It should be understood that the first order may also be understood as an ascending order of locations of the random access channel occasions in frequency domain.

The first terminal device obtains the first indication information,
when the first indication information includes one bit, the first indication information indicates an index of the first random access channel occasion in indexes {0, 4}; or
when the first indication information includes two bits, the first indication information indicates an index of the first random access channel occasion in indexes {1, 2, 3, 4}; or
when the first indication information includes three bits, the first indication information indicates an index of the first random access channel occasion in indexes {0, 1, 2, 3, 4}; or
when the first indication information includes three bits, the first indication information indicates an index of the first random access channel occasion in indexes {0, 1, 2, 3, 4, 5, 6, 7}; or
when the first terminal device does not obtain the first indication information, an index of the first random access channel occasion is 0.

It should be understood that when including three bits, the first indication information may indicate indexes of {0, 1, 2, 3, 4}, and bandwidth resources corresponding to the five random access channel occasions may cover the maximum channel bandwidth supported by the first terminal device. The first indication information may alternatively indicate indexes of eight random access channel occasions.

It should be understood that the first terminal device not obtaining the first indication information may be that the first terminal device does not receive the first indication information, or may be that a network device does not configure the first indication information.

With reference to the first aspect, in some implementations of the first aspect, a size of each of the M bandwidth resources is predefined; or when M=2, one bandwidth resource in the bandwidth resources includes resources of random access channel occasions {0, 1, 2, 3}, and the other bandwidth resource in the bandwidth resources includes resources of random access channel occasions {4, 5, 6, 7}; or when M>1, remaining (M-1) bandwidth resources are determined based on a first candidate bandwidth resource, and the first candidate bandwidth resource is indicated by using first signaling.

It should be understood that the sizes of the M bandwidth resources may be predefined, or may be determined based on the resource of the random access channel occasion. Alternatively, a start bandwidth occasion may be determined based on the random access channel occasion, and other bandwidth resources may be sequentially arranged by using the resource as a start.

With reference to the first aspect, in some implementations of the first aspect, when M> 1, the first terminal device receives second indication information, where the second indication information indicates a second bandwidth resource. The first terminal device sends a random access preamble on the first bandwidth resource. The first terminal device sends, on the second bandwidth resource, a message 3 in a random access process or a physical uplink control channel for feeding back a contention resolution message.

That is, when M> 1, the second bandwidth resource may be indicated by the indication information, and the first terminal device sends information on the first bandwidth resource and the second bandwidth resource.

With reference to the first aspect, in some implementations of the first aspect, the second indication information is carried in one or more of a random access response message, downlink control information for scheduling the random access response message, a contention resolution message, and downlink control information for scheduling the contention resolution message; and/or the second indication information is carried in an uplink grant of each media access control random access response in a random access response message.

With reference to the first aspect, in some implementations of the first aspect, when M>1, the first terminal device sends the random access preamble on the first bandwidth resource. The first terminal device receives third indication information, where the third indication information indicates a bandwidth resource for the first terminal device to send the message 3 in the random access process and/or the physical uplink control channel for feeding back the contention resolution message.

When a bit status of the third indication information is a first bit state, the first terminal device sends, on the first bandwidth resource, the message 3 in the random access process and/or the physical uplink control channel for feeding back the contention resolution message; or
when a bit status of the third indication information is a second bit state, the first terminal device sends, on the second bandwidth resource, the message 3 in the random access process and/or the physical uplink control channel for feeding back the contention resolution message.

That is, the bit status of the third indication information can be used to indicate the bandwidth resource for sending the message 3 in the random access process and/or the physical uplink control channel for feeding back the contention resolution message.

It should be understood that a relationship between the bit status of the third indication information and the indicated bandwidth resource is not limited.

With reference to the first aspect, in some implementations of the first aspect, the first terminal device obtains fourth indication information, where the fourth indication information indicates that an association configuration between an SSB and a random access is a first association configuration or a second association configuration; or if the first terminal device obtains fourth indication information, the fourth indication information indicates that an association configuration between an SSB and a random access is a second association configuration; or if the first terminal device does not receive fourth indication information, an association configuration between an SSB and a random access is a first association configuration.

That is, content of the fourth indication information may be used to indicate a type of an association configuration, or presence of the fourth indication information may be used to indicate a type of an association configuration.

According to a second aspect, a bandwidth resource determining method is provided. The method may include: A network device sends first information to a first terminal device, where the first information indicates M bandwidth resources, M is a positive integer, a size of each of the M bandwidth resources is equal to or less than a maximum channel bandwidth supported by the first terminal device, and the first terminal device is a first-type terminal device. The network device sends a first parameter, where the first parameter is a quantity of random access channel occasions for frequency division multiplexing in a time unit. The network device receives uplink information sent by the first terminal device, or send downlink information to the first terminal device on a first bandwidth resource, where the first bandwidth resource is determined by the first terminal device from the M bandwidth resources based on the first information and the first parameter.

In the method, at least one bandwidth resource whose size is within a maximum bandwidth channel range supported by the first terminal device is configured, and the first information and the first parameter are sent, so that the first terminal device determines the first bandwidth resource. This can avoid frequent switching of an operating frequency of the first terminal device, and reduce power consumption.

With reference to the second aspect, in some implementations of the second aspect, a value of the first parameter is greater than 4, and
when M=1, the M bandwidth resources are the first bandwidth resource, the first bandwidth resource includes predefined resources of N random access channel occasions, the random access channel occasions whose quantity is the first parameter include the N random access channel occasions, and N is a positive integer; or
when M=1, the network device sends first indication information, where the first indication information indicates a first random access channel occasion, a start resource block of the first bandwidth resource is the same as a start resource block of the first random access channel occasion, and the M bandwidth resources are the first bandwidth resource; or
when M> 1, each of the M bandwidth resources includes a resource corresponding to at least one random access channel occasion.

With reference to the second aspect, in some implementations of the second aspect, the value of the first parameter is 8, indexes of the random access channel occasions sorted in a first order are 0 to 7, and the first order includes an ascending order of frequencies.

With reference to the second aspect, in some implementations of the second aspect, when the first indication information includes one bit, the first indication information indicates an index of the first random access channel occasion in indexes {0, 4}; or
when the first indication information includes two bits, the first indication information indicates an index of the first random access channel occasion in indexes {1, 2, 3, 4}; or
when the first indication information includes three bits, the first indication information indicates an index of the first random access channel occasion in indexes {0, 1, 2, 3, 4}; or
when the first indication information includes three bits, the first indication information indicates an index of the first random access channel occasion in indexes {0, 1, 2, 3, 4, 5, 6, 7}; or
when the network device does not send the first indication information, an index of the first random access channel occasion is 0.

With reference to the second aspect, in some implementations of the second aspect, a size of each of the M bandwidth resources is predefined; or
when M=2, one bandwidth resource in the bandwidth resources includes resources of random access channel occasions {0, 1, 2, 3}, and the other bandwidth resource in the bandwidth resources includes resources of random access channel occasions {4, 5, 6, 7}; or
when M> 1, the network device sends first signaling, where the first signaling is used to indicate a first candidate bandwidth resource, and remaining (M-1) bandwidth resources are determined based on the first candidate bandwidth resource.

With reference to the second aspect, in some implementations of the second aspect, the network device sends second indication information, where the second indication information indicates a second bandwidth resource. The network device receives a random access preamble on the first bandwidth resource. The network device receives, on the second bandwidth resource, a message 3 in a random access process or a physical uplink control channel for feeding back a contention resolution message.

With reference to the second aspect, in some implementations of the second aspect, the second indication information is carried in one or more of a random access response message, downlink control information for scheduling the random access response message, a contention resolution message, and downlink control information for scheduling the contention resolution message; and/or the second indication information is carried in an uplink grant of each media access control random access response in a random access response message.

With reference to the second aspect, in some implementations of the second aspect, when M> 1, the network device receives a random access preamble on the first bandwidth resource. The network device sends third indication information, where the third indication information indicates a bandwidth resource for the first terminal device to send the message 3 in the random access process and/or the physical uplink control channel for feeding back the contention resolution message.

When a bit status of the third indication information is a first bit state, the network device receives, on the first bandwidth resource, the message 3 in the random access process and/or the physical uplink control channel for feeding back the contention resolution message; or
when a bit status of the third indication information is a second bit state, the network device receives, on the second bandwidth resource, the message 3 in the random access process and/or the physical uplink control channel for feeding back the contention resolution message.

With reference to the second aspect, in some implementations of the second aspect, the network device sends fourth indication information, where the fourth indication information indicates that an association configuration between an SSB and a random access is a first association configuration or a second association configuration; or
if the network device sends fourth indication information, the fourth indication information indicates that an association configuration between an SSB and a random access is a first association configuration; or if the network device does not send fourth indication information, an association configuration between an SSB and a random access is a second association configuration; or
if the network device sends fourth indication information, the fourth indication information indicates that an association configuration between an SSB and a random access is a second association configuration; or if the network device does not send fourth indication information, an association configuration between an SSB and a random access is a first association configuration.

It should be understood that extensions, definitions, explanations, and descriptions of related content in the first aspect are also applicable to same content in the second aspect.

According to a third aspect, an information transmission method is provided. The method may include: A first terminal device determines a first resource based on a first reference point and a first bandwidth, where the first reference point is used to determine a location of the first resource, and the first bandwidth is a bandwidth of the first resource. The first terminal device sends information in the first resource and/or receives information in the first resource, where the first terminal device is a first-type terminal device, and a size of the first resource is equal to or less than a maximum channel bandwidth supported by the first terminal device. The first terminal device sends uplink information in the first resource, and/or the first terminal device receives downlink information in the first resource.

The method provides the determined reference point and the determined bandwidth. This prevents the first terminal device from determining the first resource through a plurality of times of detection, reduces computing complexity of the first terminal device, and reduces power consumption.

With reference to the third aspect, in some implementations of the third aspect, the first bandwidth may be determined based on one or more of a sub-band size reported by CSI, a subcarrier spacing, and the maximum channel bandwidth supported by the first terminal device.

It should be understood that the first resource may be alternatively determined based on the first reference point and a first offset, where the first offset may also be determined based on one or more of a sub-band size reported by CSI, a subcarrier spacing, and the maximum channel bandwidth supported by the first terminal device.

It should be understood that the maximum channel bandwidth supported by the first terminal device may be a transmission bandwidth, and the transmission bandwidth may be a quantity of resource blocks corresponding to the maximum channel bandwidth at different subcarrier spacings.

With reference to the third aspect, in some implementations of the third aspect, there is an association relationship between the maximum channel bandwidth supported by the first terminal device and the subcarrier spacing.

It should be understood that the association relationship may be indicated by indication information, or may be predefined.

With reference to the third aspect, in some implementations of the third aspect, the first bandwidth may be determined based on a positive integer multiple of the maximum channel bandwidth supported by the first terminal device.

With reference to the third aspect, in some implementations of the third aspect, the first bandwidth or the first offset may be determined based on a common multiple of a plurality of items in the sub-band size reported by the CSI, the subcarrier spacing, and the maximum channel bandwidth supported by the first terminal device.

With reference to the third aspect, in some implementations of the third aspect, the first terminal device may receive indication information, where the indication information indicates the first reference point, and the first reference point may be one or more of a first RB of a second resource, a center frequency or a center subcarrier of the second resource, a last RB of the second resource, a common resource block 0, and a point A; or
the second resource is a resource configured for the second terminal device, and a quantity of resource blocks included in the second resource can be greater than a quantity of resource blocks corresponding to the maximum channel bandwidth of the first terminal device.

It should be understood that the indication information may be carried in a SIB 1 or a SIB 1 PDCCH.

It should be further understood that the first reference point may be indicated by the indication information, or may be predefined.

With reference to the third aspect, in some implementations of the third aspect, the location of the first resource may be determined based on the first reference point and the first offset.

With reference to the third aspect, in some implementations of the third aspect, the first offset may be N RBs between the first resource and the common resource block 0. The location of the first resource may be MOD(the first reference point+the first offset, BW), or MOD(BW, a reference point of the first resource-the first offset), where a BW is a bandwidth of the second resource or a carrier bandwidth.

It should be understood that an association relationship exists between the first offset and the subcarrier spacing, and may be indicated by the indication information, or may be predefined.

Second information is received, where the second information indicates at least two of the first bandwidth, the first reference point, and the first offset.

According to a fourth aspect, an information transmission method is provided. The method may include: A network device may send a first reference point and a first bandwidth to a first terminal device, where the first reference point is used to determine a location of a first resource, and the first bandwidth is a bandwidth of the first resource. The network device sends information and/or receives information in the first resource, where the first resource is determined by the first terminal device based on the first reference point and the first bandwidth, the first terminal device is a first-type terminal device, and a size of the first resource is equal to or less than a maximum channel bandwidth supported by the first terminal device.

The method provides the determined reference point and the determined bandwidth. This prevents the first terminal device from determining the first resource through a plurality of times of detection, reduces computing complexity of the first terminal device, and reduces power consumption.

It should be understood that the network device sends the first reference point and the first bandwidth is optional, and the first reference point and the first bandwidth may also be predefined.

With reference to the fourth aspect, in some implementations of the fourth aspect, the first bandwidth may be determined based on one or more of a sub-band size reported by CSI, a subcarrier spacing, and the maximum channel bandwidth supported by the first terminal device.

It should be understood that the first bandwidth may be alternatively determined based on the first reference point and a first offset, where the first offset may also be determined based on one or more of a sub-band size reported by CSI, a subcarrier spacing, and the maximum channel bandwidth supported by the first terminal device.

It should be understood that the maximum channel bandwidth supported by the first terminal device may be a transmission bandwidth, and the transmission bandwidth may be a quantity of resource blocks corresponding to the maximum channel bandwidth at different subcarrier spacings.

With reference to the fourth aspect, in some implementations of the fourth aspect, there is an association relationship between the maximum channel bandwidth supported by the first terminal device and the subcarrier spacing.

It should be understood that the association relationship may be indicated by indication information sent by the network device, or may be predefined.

With reference to the fourth aspect, in some implementations of the fourth aspect, the network device may determine the first bandwidth based on a positive integer multiple of the maximum channel bandwidth supported by the first terminal device.

With reference to the fourth aspect, in some implementations of the fourth aspect, the network device may determine the first bandwidth or the first offset based on a common multiple of a plurality of items in the sub-band size reported by the CSI, the subcarrier spacing, and the maximum channel bandwidth supported by the first terminal device.

With reference to the fourth aspect, in some implementations of the fourth aspect, the network device may send indication information, where the indication information indicates the first reference point, the first reference point may be one or more of a first RB of a second resource, a center frequency or a center subcarrier of the second resource, a last RB of the second resource, a common resource block 0, or a point A, the second resource is a resource configured for a second terminal device, and a quantity of resource blocks included in the second resource can be greater than a quantity of resource blocks corresponding to the maximum channel bandwidth for the first terminal device.

It should be understood that the indication information may be carried in a SIB 1 or a SIB 1 PDCCH.

It should be further understood that the first reference point may be indicated by the indication information, or may be predefined.

With reference to the fourth aspect, in some implementations of the fourth aspect, the network device may send the first reference point and the first offset, and the location of the first resource may be determined based on the first reference point and the first offset.

With reference to the fourth aspect, in some implementations of the fourth aspect, the first offset may be N RBs between the first resource and the common resource block 0. The location of the first resource may be MOD(the first reference point+the first offset, BW), or MOD(BW, a reference point of the first resource-the first offset), where a BW is a bandwidth of the second resource or a carrier bandwidth.

It should be understood that an association relationship exists between the first offset and the subcarrier spacing, and may be indicated by the indication information sent by the network device, or may be predefined.

According to a fifth aspect, a communication apparatus is provided. The apparatus may include:
a transceiver unit, configured to receive first information, where the first information indicates M bandwidth resources, M is a positive integer, and a size of each of the M bandwidth resources is equal to or less than a maximum channel bandwidth supported by a first-type terminal device; and the transceiver unit is further configured to receive a first parameter, where the first parameter is a quantity of random access channel occasions for frequency division multiplexing in a time unit; and
a processing unit, configured to determine a first bandwidth resource from the M bandwidth resources based on the first information and the first parameter, where
the transceiver unit is further configured to send uplink information or receive downlink information on the first bandwidth resource.

With reference to the fifth aspect, in some implementations of the fifth aspect, a value of the first parameter is greater than 4, and
when M=1, the M bandwidth resources are the first bandwidth resource, the first bandwidth resource includes predefined resources of N random access channel occasions, the random access channel occasions whose quantity is the first parameter include the N random access channel occasions, and N is a positive integer; or
when M=1, the M bandwidth resources are the first bandwidth resource, the transceiver unit is specifically configured to receive first indication information, where the first indication information indicates a first random access channel occasion, and a start resource block of the first bandwidth resource is the same as a start resource block of the first random access channel occasion; or
when M> 1, each of the M bandwidth resources includes a resource corresponding to at least one random access channel occasion.

With reference to the fifth aspect, in some implementations of the fifth aspect, the value of the first parameter is 8, indexes of the random access channel occasions sorted in a first order are 0 to 7, and the first order includes an ascending order of frequencies.

With reference to the fifth aspect, in some implementations of the fifth aspect, the transceiver unit receives the first indication information, where when the first indication information includes one bit, the first indication information indicates an index of the first random access channel occasion in indexes {0, 4}; or when the first indication information includes two bits, the first indication information indicates an index of the first random access channel occasion in indexes {1, 2, 3, 4}; or when the first indication information includes three bits, the first indication information indicates an index of the first random access channel occasion in indexes {0, 1, 2, 3, 4}; or when the first indication information includes three bits, the first indication information indicates an index of the first random access channel occasion in indexes {0, 1, 2, 3, 4, 5, 6, 7}; or when the transceiver unit does not receive the first indication information, an index of the first random access channel occasion is 0.

With reference to the fifth aspect, in some implementations of the fifth aspect, a size of each of the M bandwidth resources is predefined; or
when M=2, one bandwidth resource in the bandwidth resources includes resources of random access channel occasions {0, 1, 2, 3}, and the other bandwidth resource in the bandwidth resources includes resources of random access channel occasions {4, 5, 6, 7}; or
when M> 1, the processing unit is specifically configured to receive first signaling, where the first signaling is used to indicate a first candidate bandwidth resource, and the processing unit is specifically configured to determine remaining (M-1) bandwidth resources based on the first candidate bandwidth resource.

With reference to the fifth aspect, in some implementations of the fifth aspect, when M>1,
the transceiver unit is specifically configured to receive second indication information, where the second indication information indicates a second bandwidth resource, and the transceiver unit is further configured to send a random access preamble on the first bandwidth resource; and
the transceiver unit is further configured to send, on the second bandwidth resource, a message 3 in a random access process or a physical uplink control channel for feeding back a contention resolution message.

With reference to the fifth aspect, in some implementations of the fifth aspect, the second indication information is carried in one or more of a random access response message, downlink control information for scheduling the random access response message, a contention resolution message, and downlink control information for scheduling the contention resolution message; and/or the second indication information is carried in an uplink grant of each media access control random access response in a random access response message.

With reference to the fifth aspect, in some implementations of the fifth aspect, when M> 1, the transceiver unit is specifically configured to send a random access preamble on the first bandwidth resource and receive third indication information, where the third indication information indicates a bandwidth resource for the transceiver unit to send the message 3 in the random access process and/or send the physical uplink control channel for feeding back the contention resolution message.

With reference to the fifth aspect, in some implementations of the fifth aspect, when a bit status of the third indication information is a first bit status, the transceiver unit sends, on the first bandwidth resource, the message 3 in the random access process, and/or sends, on the first bandwidth resource, the physical uplink control channel for feeding back the contention resolution message; or
when a bit status of the third indication information is a second bit status, the transceiver unit sends, on the second bandwidth resource, the message 3 in the random access process, and/or sends, on the second bandwidth resource, the physical uplink control channel for feeding back the contention resolution message.

With reference to the fifth aspect, in some implementations of the fifth aspect, the transceiver unit receives fourth indication information, where the fourth indication information indicates that an association configuration between an SSB and a random access channel occasion is a first association configuration or a second association configuration, and the association configuration is an association configuration between a quantity of SSBs and a quantity of random access channel occasions.

With reference to the fifth aspect, in some implementations of the fifth aspect, if the transceiver unit receives fourth indication information, where the fourth indication information indicates that an association configuration between an SSB and a random access channel occasion is a first association configuration; or if the transceiver unit does not receive fourth indication information, an association configuration between an SSB and a random access channel occasion is a second association configuration; or
if the transceiver unit receives fourth indication information, where the fourth indication information indicates that an association configuration between an SSB and a random access channel occasion is a second association configuration; or if the transceiver unit does not receive fourth indication information, an association configuration between an SSB and a random access channel occasion is a first association configuration.

With reference to the fifth aspect, in some implementations of the fifth aspect, the first parameter is carried in random access channel configuration information.

With reference to the fifth aspect, in some implementations of the fifth aspect, the first information includes system information.

According to a sixth aspect, a communication apparatus is provided. The apparatus may include: a transceiver unit, configured to send a first parameter to a first terminal device, where the first parameter is a quantity of random access channel occasions for frequency division multiplexing in a time unit; and a processing unit, configured to configure M bandwidth resources, where a size of each of the M bandwidth resources is equal to or less than a maximum channel bandwidth supported by the first terminal device, where the transceiver unit is further configured to receive uplink information sent by the first terminal device, or send downlink information to the first terminal device on a first bandwidth resource, and the first bandwidth resource is determined by the first terminal device from the M bandwidth resources based on the first information and the first parameter.

With reference to the sixth aspect, in some implementations of the sixth aspect, a value of the first parameter is greater than 4, and
when M=1, the M bandwidth resources are the first bandwidth resource, the first bandwidth resource includes predefined resources of N random access channel occasions, the random access channel occasions whose quantity is the first parameter include the N random access channel occasions, and N is a positive integer; or
when M=1, the transceiver unit sends first indication information, where the first indication information indicates a first random access channel occasion, a start resource block of the first bandwidth resource is the same as a start resource block of the first random access channel occasion, and the M bandwidth resources are the first bandwidth resource; or
when M> 1, each of the M bandwidth resources includes a resource corresponding to at least one random access channel occasion.

With reference to the sixth aspect, in some implementations of the sixth aspect, the value of the first parameter is 8, indexes of the random access channel occasions sorted in a first order are 0 to 7, and the first order includes an ascending order of frequencies.

With reference to the sixth aspect, in some implementations of the sixth aspect, when the first indication information includes one bit, the first indication information indicates an index of the first random access channel occasion in indexes {0, 4}; or
when the first indication information includes two bits, the first indication information indicates an index of the first random access channel occasion in indexes {1, 2, 3, 4}; or
when the first indication information includes three bits, the first indication information indicates an index of the first random access channel occasion in indexes {0, 1, 2, 3, 4}; or
when the first indication information includes three bits, the first indication information indicates an index of the first random access channel occasion in indexes {0, 1, 2, 3, 4, 5, 6, 7}; or
when the transceiver unit does not send the first indication information, an index of the first random access channel occasion is equal to 0.

With reference to the sixth aspect, in some implementations of the sixth aspect, the first information indicates the M bandwidth resources; and
a size of each of the M bandwidth resources is predefined; or
when M=2, one bandwidth resource in the bandwidth resources includes resources of random access channel occasions {0, 1, 2, 3}, and the other bandwidth resource in the bandwidth resources includes resources of random access channel occasions {4, 5, 6, 7}; or
when M> 1, the transceiver unit is further configured to send first signaling, where the first signaling is used to indicate a first candidate bandwidth resource, and remaining (M-1) bandwidth resources are determined based on the first candidate bandwidth resource.

With reference to the sixth aspect, in some implementations of the sixth aspect, when M> 1, the transceiver unit is further configured to: send second indication information, where the second indication information indicates a second bandwidth resource; receive a random access preamble on the first bandwidth resource; and receive, on the second bandwidth resource, a message 3 in a random access process or a physical uplink control channel for feeding back a contention resolution message.

With reference to the sixth aspect, in some implementations of the sixth aspect, the second indication information is carried in one or more of a random access response message, downlink control information for scheduling the random access response message, a contention resolution message, and downlink control information for scheduling the contention resolution message; and/or the second indication information is carried in an uplink grant of each media access control random access response in a random access response message.

With reference to the sixth aspect, in some implementations of the sixth aspect, when M> 1, the transceiver unit is specifically configured to receive a random access preamble on the first bandwidth resource and send third indication information, where the third indication information indicates a bandwidth resource for the first terminal device to send the message 3 in the random access process and/or the physical uplink control channel for feeding back the contention resolution message.

With reference to the sixth aspect, in some implementations of the sixth aspect, when a bit status of the third indication information is a first bit status, the transceiver unit receives, on the first bandwidth resource, the message 3 in the random access process, and/or receives, on the first bandwidth resource, the physical uplink control channel for feeding back the contention resolution message; or
when a bit status of the third indication information is a second bit status, the transceiver unit receives, on the second bandwidth resource, the message 3 in the random access process, and/or receives, on the second bandwidth resource, the physical uplink control channel for feeding back the contention resolution message.

With reference to the sixth aspect, in some implementations of the sixth aspect, the transceiver unit is further configured to send fourth indication information, where the fourth indication information indicates that an association configuration between an SSB and a random access channel occasion is a first association configuration or a second association configuration.

With reference to the sixth aspect, in some implementations of the sixth aspect, if the transceiver unit sends fourth indication information, where the fourth indication information indicates that an association configuration between an SSB and a random access channel occasion is a first association configuration; or if the transceiver unit does not send fourth indication information, an association configuration between an SSB and a random access channel occasion is a second association configuration; or
if the transceiver unit sends fourth indication information, where the fourth indication information indicates that an association configuration between an SSB and a random access channel occasion is a second association configuration; or if the transceiver unit does not send fourth indication information, an association configuration between an SSB and a random access channel occasion is a first association configuration.

With reference to the sixth aspect, in some implementations of the sixth aspect, the first parameter is carried in random access channel configuration information.

With reference to the sixth aspect, in some implementations of the sixth aspect, the first information includes system information.

According to a seventh aspect, a communication apparatus is provided. The communication apparatus is configured to implement the method in any one of the first aspect or the third aspect or the possible implementations of the first aspect or the third aspect, or all possible implementations of the first aspect or the third aspect.

According to an eighth aspect, a communication apparatus is provided. The communication apparatus is configured to implement the method in any one of the second aspect or the fourth aspect or the possible implementations of the second aspect or the fourth aspect, or all possible implementations of the second aspect or the fourth aspect.

According to a ninth aspect, a communication apparatus is provided. The apparatus includes: a memory, configured to store a program; and a processor, configured to execute the program stored in the memory. When the program stored in the memory is executed, the processor is configured to perform the method performed by the first terminal device in any one of the first aspect or the third aspect and the implementations of the first aspect or the third aspect.

According to a tenth aspect, a communication apparatus is provided. The apparatus includes: a memory, configured to store a program; and a processor, configured to execute the program stored in the memory. When the program stored in the memory is executed, the processor is configured to perform the method performed by the network device in any one of the second aspect or the fourth aspect or the implementations of the second aspect or the fourth aspect.

According to an eleventh aspect, a computer-readable medium is provided. The computer-readable medium stores program code executed by a device, and the program code includes the method performed by the first terminal device in any implementation of the first aspect or the third aspect.

According to a twelfth aspect, a computer-readable medium is provided. The computer-readable medium stores program code executed by a device, and the program code includes the method executed by the network device in any implementation of the second aspect or the fourth aspect.

According to a thirteenth aspect, a computer program product including instructions is provided. When the computer program product runs on a computer, the computer is enabled to perform the method in any implementation of the first aspect or the second aspect.

According to a fourteenth aspect, a chip is provided. The chip includes a processor and a data interface, and the processor reads, through the data interface, instructions stored in a memory, to perform the method in any implementation of the first aspect, the second aspect, the third aspect, or the fourth aspect.

According to a fifteenth aspect, a system is provided. The system includes the apparatus in any possible implementation of the fifth aspect, the sixth aspect, the seventh aspect, the eighth aspect, the ninth aspect, or the tenth aspect, or all possible implementations of the fifth aspect, the sixth aspect, the seventh aspect, the eighth aspect, the ninth aspect, or the tenth aspect.

Optionally, in an implementation, the chip may further include a memory, and the memory stores instructions. A processor is configured to execute the instructions stored in the memory, and when the instructions are executed, the processor is configured to perform the method in any implementation of the first aspect or the second aspect or the third aspect or the fourth aspect.

The foregoing chip may be specifically a field-programmable gate array (field-programmable gate array, FPGA) or an application-specific integrated circuit (application-specific integrated circuit, ASIC).

### BRIEF DESCRIPTION OF DRAWINGS

FIG. 1 is a schematic diagram of an architecture of a communication system to which an embodiment of this application is applicable;
FIG. 2 is a schematic flowchart of an information transmission method according to an embodiment of this application;
FIG. 3 is a schematic diagram of an information transmission method to which an embodiment of this application is applicable;
FIG. 4 is a schematic diagram of another information transmission method to which an embodiment of this application is applicable;
FIG. 5 is a schematic diagram of resource distribution to which an embodiment of this application is applicable;
FIG. 6 is a schematic diagram of a resource to which an embodiment of this application is applicable;
FIG. 7 is a schematic diagram of a resource to which an embodiment of this application is applicable;
FIG. 8 is a schematic diagram of resource distribution to which an embodiment of this application is applicable;
FIG. 9 is a schematic diagram of a resource location determining method to which an embodiment of this application is applicable;
FIG. 10 is a schematic diagram of a resource location to which an embodiment of this application is applicable;
FIG. 11 is a schematic flowchart of an information transmission method according to an embodiment of this application;
FIG. 12 is a schematic diagram of a resource to which an embodiment of this application is applicable;
FIG. 13 is a schematic diagram of a resource location determining method to which an embodiment of this application is applicable;
FIG. 14 is a schematic block diagram of a communication apparatus according to an embodiment of this application; and
FIG. 15 is a schematic block diagram of another communication device according to an embodiment of this application.

### DESCRIPTION OF EMBODIMENTS

The following describes technical solutions of this application with reference to accompanying drawings.

Embodiments of this application are applied to various communication systems, for example, a wireless local area network (Wireless Local Area Network, WLAN) system, a narrowband internet of things (Narrowband Internet of Things, NB-IoT) system, a global system for mobile communications (Global System for Mobile Communications, GSM), an enhanced data rate for GSM evolution (Enhanced Data Rate for GSM Evolution, EDGE) system, a wideband code division multiple access (Wideband Code Division Multiple Access, WCDMA) system, a code division multiple access 2000 (Code Division Multiple Access, CDMA2000) system, a time division-synchronous code division multiple access (Time Division-Synchronization Code Division Multiple Access, TD-SCDMA) system, a long term evolution (Long Term Evolution, LTE) system, a satellite communication system, a 5th generation (5th generation, 5G) system, and a new communication system emerging in the future.

Mobile communication technologies have profoundly changed people's life, but people's pursuit of a mobile communication technology with higher performance has not stopped. To cope with explosive growth of mobile data traffic, massive mobile communication device connections, and various emerging new services and application scenarios in the future, a 5G mobile communication system emerges. The International Telecommunication Union (international telecommunication union, ITU) defines three major application scenarios for 5G and future mobile communication systems: enhanced mobile broadband (enhanced mobile broadband, eMBB), ultra-reliable low-latency communication (ultra-reliable low-latency communication, URLLC), and massive machine-type communications (massive machine-type communications, mMTC).

Typical eMBB services include an ultra high-definition video, augmented reality (augmented reality, AR), virtual reality (virtual reality, VR), and the like. These services have a large data transmission amount and a very high transmission rate. Typical URLLC services include wireless control in an industrial manufacturing or production process, motion control and remote repair of a self-driving car and an unmanned aircraft, a tactile interaction application such as remote surgery, and the like. These services have ultra-high reliability, a low latency, a small data transmission amount, and burstiness. Typical mMTC services include smart grid distribution automation, smart cities, and the like. These services have a huge quantity of connected network devices, a small amount of data transmission, and insensitivity of data to a transmission latency. These mMTC terminals need to satisfy requirements of low costs and extremely long standby duration.

Different services have different requirements for a mobile communication system. How to better support all data transmission requirements of a plurality of different services is a technical problem to be resolved in the current 5G mobile communication system. For example, how to support both an mMTC service and an eMBB service, or how to support both a URLLC service and an eMBB service.

Research on the mMTC in 5G standards is not widely carried out.

Currently, in the standards, user equipment (user equipment, UE) of the mMTC service is referred to as reduced capability UE (reduced capability UE, REDCAP UE), narrow-bandwidth user equipment, an internet of things device, or a low-end smart handheld terminal. This type of UE may be less complex than other UEs in terms of a bandwidth, power consumption, and a quantity of antennas. For example, this type of UE has a narrower bandwidth, lower power consumption, and a smaller quantity of antennas. This type of UE may also be referred to as a lightweight software (NR light, NRL) terminal device. A maximum bandwidth supported by mMTC user equipment is less than 100 MHz. It should be noted that the mMTC user equipment in this application is not only a machine-type communication device, but also may be a smart handheld terminal.

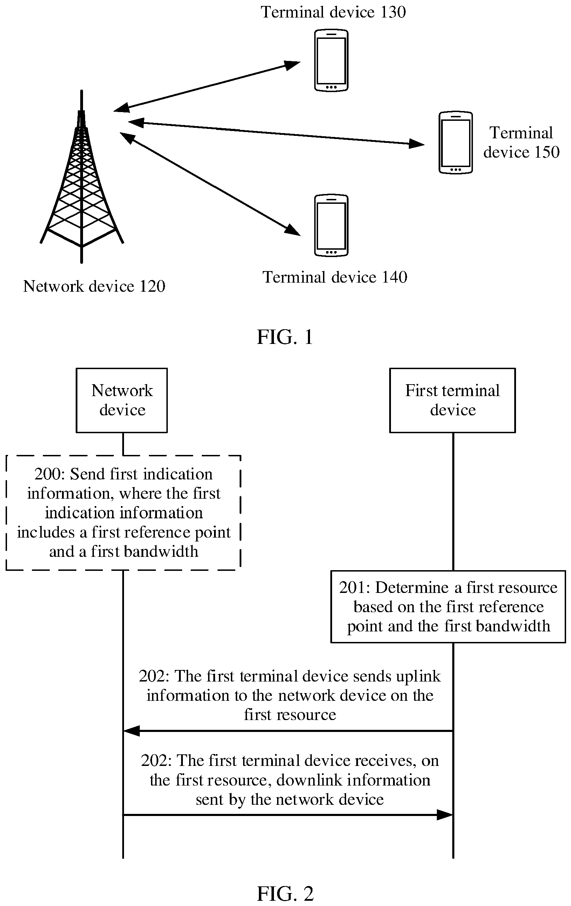

FIG. 1 is a schematic diagram of an architecture of a mobile communication system in which an embodiment of this application is used. The mobile communication system includes a radio access network device 120, namely, a network device 120, and at least one terminal device (for example, a terminal device 130, a terminal device 140, and a terminal device 150 in FIG. 1). The terminal device is connected to the radio access network device in a wireless manner, and the radio access network device is connected to a core network device in a wireless or wired manner. The core network device and the radio access network device may be independent and different physical devices, or functions of the core network device and logical functions of the radio access network device are integrated into a same physical device, or a part of functions of the core network device and a part of functions of the radio access network device are integrated into one physical device. The terminal device may be located at a fixed position, or may be mobile. FIG. 1 is only a schematic diagram. The communication system may further include another network device, for example, may further include a wireless relay device and a wireless backhaul device, which are not shown in FIG. 1. Quantities of core network devices, radio access network devices, and terminal devices included in the mobile communication system are not limited in this embodiment of this application.

It should be understood that an information transmitting end in the communication system in this application may be the network device or the terminal device, and an information receiving end may be the network device or the terminal device. This is not limited in this application, provided that a first-type terminal device participates in communication in the communication system.

In this embodiment of this application, an example in which the network device and a first terminal device are used as two interaction parties is used for solution description. This is not limited herein.

The radio access network device is an access device used by the terminal device to access the mobile communication system in a wireless manner, and may be a base station NodeB, an evolved NodeB (Evolved NodeB, eNodeB), a base station in a 5G mobile communication system, a base station in a future mobile communication system, an access node in a Wi-Fi system, or the like. A specific technology and a specific device form of the radio access network device are not limited in this embodiment of this application.

The terminal device may also be referred to as a terminal (Terminal), user equipment UE, a mobile station (mobile station, MS), a mobile terminal (mobile terminal, MT), or the like. The terminal device may be a mobile phone (mobile phone), a tablet computer (Pad), a computer with a wireless receiving and sending function, a virtual reality (Virtual Reality, VR) terminal device, an augmented reality (Augmented Reality, AR) terminal device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like.

The radio access network device and the terminal device may be deployed on land, including an indoor or outdoor scenario and a handheld or in-vehicle scenario; or may be deployed on water; or may be deployed on an airplane, a balloon, or a satellite in the air. Application scenarios of the radio access network device and the terminal device are not limited in this embodiment of this application.

This embodiment of this application is applicable to downlink signal transmission, uplink signal transmission, or device-to-device (device to device, D2D) signal transmission. For the downlink signal transmission, a sending device is the radio access network device, and correspondingly a receiving device is the terminal device. For the uplink signal transmission, a sending device is the terminal device, and correspondingly a receiving device is the radio access network device. For the D2D signal transmission, a sending device is a terminal device, and correspondingly a receiving device is also a terminal device. A signal transmission direction is not limited in this embodiment of this application.

Communication between the radio access network device and the terminal device and communication between terminal devices may be performed by using a licensed spectrum (licensed spectrum), may be performed by using an unlicensed spectrum (unlicensed spectrum), or may be performed by using both of a licensed spectrum and an unlicensed spectrum. A spectrum below 6 GHz, a spectrum above 6 GHz, or both of a spectrum below 6 GHz and a spectrum above 6 GHz may be used for communication between the radio access network device and the terminal device, and between the terminal devices. Spectrum resources used by the radio access network device and the terminal device are not limited in this embodiment of this application.

For ease of understanding this application, a random access process is briefly described. The random access process is as follows:
The terminal device searches for a synchronization signal and a physical broadcast channel (Synchronization Signal and PBCH, SSB), and the terminal device obtains, by searching for the SSB, a master information block (Master information block, MIB) sent by the network device. The terminal device obtains a time domain resource and a frequency domain resource in a control resource set (Control resource set, CORESET) based on the MIB. The terminal device may detect, in the CORESET, downlink control information (Downlink control information, DCI) for scheduling a system information block (System information block, SIB), and receive an SIB 1 at a time-frequency location indicated by DCI. In this way, information such as an initial uplink bandwidth part (initial uplink bandwidth part, Initial UL BWP), an initial downlink bandwidth part (initial downlink bandwidth part, Initial DL BWP), a random access preamble list, and a random access occasion list indicated in the SIB 1 can be received.

The terminal device sends in a random access occasion (RACH occasion, RO) resource associated with the SSB, based on the SIB 1, a physical random access channel (physical random access channel, PRACH, namely, a Msg1) carrying a random access preamble.

If a base station successfully receives the random access preamble and allows access of UE, the base station sends an RAR, namely, a Msg2, to the UE in a preconfigured random access response (Random access response, RAR) window (window).

In addition, the UE monitors, in the preconfigured RAR window, downlink control information (Downlink control information, DCI) transmitted on a physical downlink control channel (Physical downlink control channel, PDCCH), where the DCI indicates the UE to obtain RAR information from a media access control (Media Access Control, MAC) protocol data unit (Protocol Data Unit, PDU) carried on a physical downlink shared channel (Physical downlink shared channel, PDSCH).

It should be understood that if the base station cannot receive the preamble (preamble) due to a conflict between random access preambles selected by different UEs, a poor channel condition, or the like, the base station does not send the RAR information. In this case, the UE does not detect the DCI and a MAC RAR in the RAR window. As a result, a current random access fails.

After successfully detecting the DCI, the terminal receives the random access response RAR (namely, the Msg2), and sends a physical uplink shared channel (Physical Uplink Shared Channel, PUSCH, namely, a Msg3) based on a time-frequency resource indicated by an uplink grant (UL grant) in the random access response. Then, the network device sends DCI to the terminal device, where the DCI indicates a time-frequency resource carrying a contention resolution message, namely, a Msg4. The terminal device detects the DCI, and receives the Msg4.

It should be noted that, before a radio resource control (Radio Resource Control, RRC) connection is established, the UE needs to receive, in a CORESET 0, a PDCCH for scheduling the SIB 1, a PDSCH carrying the SIB 1, a PDCCH for scheduling SI, a PDSCH carrying the SI, a PDCCH for scheduling the Msg2, a PDSCH carrying the Msg2, a PDCCH for scheduling the Msg3, a PDCCH for scheduling the Msg4, and a PDSCH carrying the Msg4. Before the radio resource control (Radio Resource Control, RRC) connection is established, the UE needs to send, in the initial UL BWP, the Msg1, the PUSCH carrying the Msg3, and the PUCCH for feeding back the Msg4.

For ease of understanding embodiments of this application, the following briefly describes related concepts in this application.
1. UE in this application may be classified into a first-type terminal device and a second-type terminal device. The first-type terminal device is, for example, reduced capability UE (reduced capability UE, REDCAP UE), and the second-type terminal device may be legacy UE, for example, eMBB UE.

A feature of the first-type terminal device is different from a feature of the second-type terminal device, and the feature includes one or more of the following:
a bandwidth, a quantity of supported or configured resources, a quantity of transmit antenna ports and/or a quantity of receive antenna ports, a quantity of radio frequency channels, a quantity of hybrid automatic repeat request (hybrid automatic repeat request, HARQ) processes, a supported peak rate, an application scenario, a delay requirement, a processing capability, a protocol release, a duplex manner, a service, and the like. The following describes in detail the first feature.

For the bandwidth, or a channel bandwidth, or a maximum channel bandwidth supported or configured by a terminal device, a bandwidth of the first-type terminal device and a bandwidth of the second-type terminal device are different. For example, the bandwidth of the first-type terminal device may be 20 MHz, 10 MHz, or 5 MHz, and the bandwidth of the second-type terminal device may be 100 MHz. It may be understood that, with development of communication technologies, a maximum channel bandwidth supported by the first-type terminal device may no longer be 20 MHz, 10 MHz, or 5 MHz, but evolve to a wider or narrower bandwidth, for example, 3 MHz, 25 MHz, or 50 MHz.

For the quantity of supported or configured resources, the quantity of resources may be a quantity of RBs, REs, subcarriers, RB groups, REG bundles, control channel elements, subframes, radio frames, slots, mini-slots, and/or symbols. A quantity of resources supported or configured by the first-type terminal device is different from that of the second-type terminal device. For example, the quantity of resources supported by the first-type terminal device is 48 RBs, and the quantity of resources supported by the second-type terminal device is 96 RBs.

For the quantity of transmit antenna ports and/or the quantity of receive antenna ports, a quantity of transmit antenna ports and/or a quantity of receive antenna ports of the first-type terminal device is different from that/those of the second-type terminal device. For example, the quantity of transmit antenna ports of the first-type terminal device may be 1, and the quantity of receive antenna ports of the first-type terminal device may be 2; and the quantity of transmit antenna ports of the second-type terminal device may be 2, and the quantity of receive antenna ports of the second-type terminal device may be 4.

For the quantity of radio frequency channels, a quantity of radio frequency channels of the first-type terminal device is different from that of the second-type terminal device. For example, the quantity of radio frequency channels of the first-type terminal device may be 1, and the quantity of radio frequency channels of the second-type terminal device may be 2.

For the quantity of HARQ processes, a quantity of HARQ processes supported by the first-type terminal device is different from that supported by the second-type terminal device. For example, the quantity of HARQ processes of the first-type terminal device may be 8, and the quantity of HARQ processes of the second-type terminal device may be 16.

For the supported peak rate, a maximum peak rate of the first-type terminal device is different from that of the second-type terminal device. For example, the maximum peak rate supported by the first-type terminal device may be 100 Mbps, and the peak rate supported by the second-type terminal device may be 200 Mbps.

For the application scenario, the first-type terminal device and the second-type terminal device serve in different application scenarios. For example, the first-type terminal device is applied to industrial wireless sensing, video surveillance, a wearable device, and the like; and the second-type terminal device is applied to mobile communication, video internet access, and the like.

For the delay requirement, the first-type terminal device and the second-type terminal device have different transmission delay requirements. For example, a delay requirement of the first-type terminal device may be 500 milliseconds, and a delay requirement of the second-type terminal device may be 100 milliseconds.

For the processing capability, in different subcarrier spacing (subcarrier space, SCS) conditions, the first-type terminal device and the second-type terminal device have different processing speeds on channel or data processing time sequences. For example, the first-type terminal device does not support a complex operation, where the complex operation may include artificial intelligence (artificial intelligence, AI) and virtual reality (virtual reality, VR) rendering. The second-type terminal device supports the complex operation. It is understood that a processing capability of the first-type terminal device is lower than that of the second-type terminal device.

For the protocol release, the first-type terminal device and the second terminal device are terminal devices of different protocol releases. For example, a protocol release supported by the first-type terminal device is Release 17 and a protocol release after Release 17, and a protocol release supported by the second-type terminal device is a protocol release before Release 17, for example, Release 15 or Release 16.

For the duplex manner, the duplex manner includes half-duplex and full-duplex. For example, the first-type terminal device works in a half-duplex mode, and the second-type terminal device works in a full-duplex mode.

For the service, the service includes but is not limited to an internet of things application, such as video surveillance and mobile broadband MBB. For example, a service supported by the first-type terminal device is video surveillance, and a service supported by the second-type terminal device is mobile broadband MBB. This is not limited in embodiments of this application.

It should be understood that another type of terminal device or a future new type of terminal device that also supports the technical solutions of this application also falls within the protection scope of this application.

In this application, a first terminal device may be an example of the first-type terminal device, and a second terminal device may be an example of the second-type terminal device.
2. An initial downlink bandwidth part (initial downlink bandwidth part, Initial DL BWP) is indicated in an SIB 1 and includes a CORESET in a frequency range, but takes effect only after a Msg4 is received.
3. An initial uplink bandwidth part (initial uplink bandwidth part, Initial UL BWP) is indicated in an SIB 1, and HARQ-ACK feedback of an uplink channel PRACH, a Msg3, and a Msg4 in an initial access process is performed in a range of the initial UL BWP.
4. A CORESET is a control resource set. A terminal device is receiving downlink control information or downlink data information in the CORESET. When the terminal device does not establish an RRC connection to a peer device, a frequency range of receiving a downlink control channel and a downlink data channel corresponds to a CORESET 0.
5. A downlink bandwidth part (downlink bandwidth part, DL BWP) is a downlink operating bandwidth configured by a network device for a terminal device after the terminal device is connected to the network device.
6. An uplink bandwidth part (uplink bandwidth part, UL BWP) is an uplink operating bandwidth configured by a network device for a terminal device after the terminal device is connected to the network device.
   It should be understood that the reduced capability terminal device is a relative concept. This is not limited in this application. For example, a feature of a new type of terminal device that may be developed in the future in at least one aspect of a bandwidth, a quantity of antennas, device power consumption, and the like is more complex than that of the existing legacy UE. In this case, the legacy UE is used as the first-type terminal device in this application, and the new type of terminal device is used as the second-type terminal device in this application. Therefore, the new type of terminal device is still applicable to embodiments of this application, and falls within the protection scope of this application.
7. A center frequency is a center frequency of a resource block, or a resource block with a center index in a bandwidth.

A start resource block (Resource block, RB) is a resource block with a smallest index in a bandwidth, or a first resource block in a bandwidth.

An end resource block (Resource block, RB) is a resource block with a largest index in a bandwidth, or a last resource block in a bandwidth.

It should be understood that a resource in this application may be a symbol, a slot, a mini-slot, a subframe, or the like. The resource in this application may alternatively be a subcarrier, a resource block, a carrier, a channel control element, or the like.

When the resource in this application is a symbol, a resource unit may be a slot, a short slot, or a subframe. When the resource in this application is a subcarrier, a resource unit is a resource block, a carrier, a channel control element, or the like.

For ease of understanding embodiments of this application, related terms are explained in advance.

In embodiments of this application, a resource is described differently, for example, a first resource or a bandwidth resource.

The first resource may be an uplink BWP, a downlink BWP, an initial downlink BWP, or an initial uplink BWP. A size of the first resource is equal to or less than the maximum channel bandwidth supported by the first terminal device. A first control resource set is expressed as a CORESET a. For example, before the RRC connection is established, the CORESET a is the CORESET 0. For example, before the RRC connection is established or after the RRC connection is established, the CORESET a may be a common CORESET, and at least one RB in the common CORESET may not be within a range of the CORESET 0. That is, the CORESET a and the CORESET 0 may be different CORESETs.

The bandwidth resource may be a BWP, or a resource block whose size is equal to or less than the maximum channel bandwidth supported by the first terminal device. For example, the bandwidth resource may be an initial uplink BWP. For example, the bandwidth resource may be an uplink BWP. For example, the bandwidth resource may be a downlink BWP. For example, the bandwidth resource may be an initial downlink BWP. The bandwidth resource in this application is a bandwidth resource of the reduced capability terminal device.

In this application, the size of the bandwidth resource is equal to or less than the maximum channel bandwidth supported by the first terminal device, and the size of the bandwidth resource may be predefined or indicated by the network device. For example, the size may be 5 MHz, or a quantity of RBs corresponding to 5 MHz in different subcarrier spacings; or 10 MHz, or a quantity of RBs corresponding to 10 MHz in different subcarrier spacings; or 20 MHz, or a quantity of RBs corresponding to 20 MHz in different subcarrier spacings.

It should be understood that the first resource may be equivalent to the bandwidth resource, and resource determining methods in embodiments are applicable to both the first resource and the bandwidth resource.

A time unit may be any one of a subframe, a radio frame, a slot, a mini-slot, a symbol, a microsecond, a millisecond, or a second.

Uplink information includes one or more of a random access channel (random access preamble), a message 3 in a random access process, and a physical uplink control channel for feeding back a contention resolution message.

The message 3 in the random access process includes one or more of first transmission of a PUSCH carrying the Msg3 (initial transmission of the Msg3), first-hop transmission of the first transmission of the PUSCH carrying the Msg3 (first-hop transmission of the initial transmission of the Msg3), second-hop transmission of the first transmission of the PUSCH carrying the Msg3 (second-hop transmission of the initial transmission of the Msg3), transmission after the first transmission of the PUSCH carrying the Msg3 (retransmission of the Msg3 or repetition of the Msg3), first-hop transmission of the transmission after the first transmission of the PUSCH carrying the Msg3 (first-hop transmission of the retransmission of the Msg3 or the repetition of the Msg3), and second-hop transmission of the transmission after the first transmission of the PUSCH carrying the Msg3 (second-hop transmission of the retransmission of the Msg3 or the repetition of the Msg3).

The physical uplink control channel for feeding back the contention resolution message includes one or more of first transmission (initial transmission) of a PUCCH carrying a Msg4, first-hop transmission of the first transmission of the PUCCH carrying the Msg4, second-hop transmission of the first transmission of the PUCCH carrying the Msg4, transmission (retransmission or repetition) after the first transmission of the PUCCH carrying the Msg4, first-hop transmission of the transmission after the first transmission of the PUCCH carrying the Msg4, and second-hop transmission of the transmission after the first transmission of the PUCCH carrying the Msg4.

The UE receives one or more of downlink control information, a downlink shared channel, a demodulation reference signal, a positioning reference signal, and the like in a downlink BWP. The UE sends one or more of an uplink control channel, an uplink shared channel, a random access channel, an uplink demodulation reference signal, and a sounding reference signal in an uplink BWP. For UE that is capable of simultaneously performing downlink reception and uplink transmission, the UE sends uplink information on an uplink BWP, and receives downlink information on a downlink BWP. The uplink BWP and the uplink BWP may have different frequency ranges. For example, frequency division multiplexing FDD UE is capable of simultaneously performing downlink reception and uplink transmission. For example, UE enabled with TDD uplink and downlink decoupling is capable of simultaneously performing downlink reception and uplink transmission. For example, before the UE establishes an RRC connection, the UE needs to send, on an initial UL BWP, one or more of a Msg1, a PUSCH carrying a Msg3, a retransmitted PUSCH carrying a Msg3, and a PUCCH for feeding back a Msg4.

The UE sends a random access preamble in a random access channel occasion (RACH occasion, RO). In time domain, for one PRACH transmission occasion, a maximum of eight RACH occasions may be configured in frequency division multiplexing. For example, a subcarrier spacing of a PRACH is 30 kHz, a bandwidth of one RO is 4.32 MHz, and a total bandwidth of eight ROs in frequency division multiplexing is 34.56 MHz. There is a mapping relationship between an SSB and the RO. A quantity of ROs in each SSB is configured by using a parameter in a system information block 1, and the SSB is mapped to the RO in a time domain first and then in frequency domain. For example, every two ROs are mapped to a same SSB, a subcarrier spacing is 30 kHz, a quantity of ROs in frequency division multiplexing is 8, and a quantity of SSBs is 8. A frequency range of the eight ROs in frequency division multiplexing may exceed a maximum channel bandwidth supported by the reduced capability terminal device. When accessing a cell, the UE obtains one SSB and sends a PRACH in an RO corresponding to the SSB. For example, after sending the PRACH, the UE next sends the PUSCH carrying the Msg3. If a total frequency range corresponding to a frequency range in which the Msg1 is sent and a frequency range in which the PUSCH carrying the Msg3 is sent in terms of a frequency exceeds the maximum channel bandwidth of the UE, frequency tuning needs to be performed after the PRACH is sent, so as to send the PUSCH carrying the Msg3. Frequency tuning occurs on receiving of adjacent downlink information for the FDD UE or the UE enabled with TDD uplink and downlink decoupling.

Frequency tuning reduces symbols available for data transmission, reduces resource utilization efficiency, increases power consumption of the UE, and increases implementation complexity of the UE. In addition, if the bandwidth resource is configured in a manner in which any RB may be used as a start RB of the bandwidth resource, and any resource size may be used as a length of the bandwidth resource, because the maximum channel bandwidth supported by the reduced capability terminal device is less than a carrier bandwidth, the reduced capability terminal device needs to store all possible configurations. This causes excessively high complexity of computing the bandwidth resource by the UE.

To resolve the foregoing problem, an embodiment of this application provides an information transmission method, as shown in FIG. 2.

200: A network device sends indication information to a first terminal device, where the indication information may indicate a first resource, the indication information may include a first reference point, or may include a first bandwidth, the first reference point may be used to determine a location of the first resource, and the first bandwidth may be a size of a bandwidth of the first resource.

It should be understood that 200 is optional, and the first reference point and the first bandwidth may also be predefined. This is not limited in this application.

201: The first terminal device determines the first resource based on the first reference point and/or the first bandwidth, where the size of the first resource is equal to or less than a maximum channel bandwidth supported by the first terminal device.

202: The first terminal device sends uplink information or receives downlink information in the first resource.

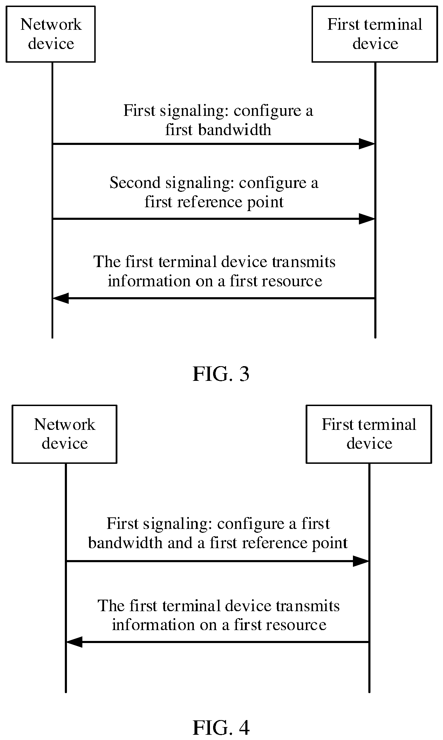

It should be understood that the indication information may indicate the first reference point and the first bandwidth simultaneously, as shown in FIG. 3, or may indicate the first reference point and the first bandwidth separately, as shown in FIG. 4. One piece of indication information may indicate the first reference point, and another piece of indication information indicates the first bandwidth; or one piece of indication information indicates the first bandwidth, and another piece of indication information indicates the first reference point; or the indication information may indicate only the first reference point, or may indicate only the first bandwidth.

It should be understood that information about the first reference point and/or about the first bandwidth may alternatively be carried in other information, and another equivalent alternative solution also falls within the protection scope of this application.

For example, the network device may first receive channel state information (Channel State Information, CSI) from the first terminal device, where the CSI includes information about a sub-band size, and the network device determines a bandwidth of the first resource of the first terminal device based on the sub-band size.

It should be understood that the first reference point may be used as the location of the first resource, or the location of the first resource may be determined based on the first reference point and a first offset.

The first bandwidth, the first offset, and the first reference point may alternatively be predefined. This is not limited in this application.

The first bandwidth may be determined based on one or more of the sub-band size reported by the CSI, a subcarrier spacing, and a bandwidth supported by the first terminal device.

Alternatively, the first offset may be determined based on one or more of the sub-band size reported by the CSI, the subcarrier spacing, and the first bandwidth supported by the first terminal device.

Specifically, the first bandwidth may be configured based on first configuration information, the first offset may be configured based on second configuration information, and the first reference point may be configured based on third configuration information. The first configuration information, the second configuration information, and the third configuration information may be carried in different information, or may be carried in same information, for example, may be carried in an SIB 1.

In a possible implementation, the first resource is determined based on the bandwidth supported by the first terminal device.

The bandwidth supported by the first terminal device may be a channel bandwidth, or may be a transmission bandwidth corresponding to a channel bandwidth. For example, the bandwidth supported by the first terminal device may be 5 MHz, 10 MHz, 20 MHz, or a quantity of RBs corresponding to 5 MHz, 10 MHz, or 20 MHz at a different subcarrier spacing.

When the bandwidth supported by the first terminal device is a first channel bandwidth, the first channel bandwidth is one of maximum channel bandwidths supported by the first terminal device. For example, the first channel bandwidth may be a minimum bandwidth in the maximum channel bandwidths supported by the first terminal device. For example, the supported maximum channel bandwidths reported by the first terminal device may be 5 MHz, 10 MHz, 15 MHz, and 20 MHz, and the first channel bandwidth may be one of 5 MHz, 10 MHz, 15 MHz, and 20 MHz. The minimum bandwidth in the supported maximum channel bandwidths reported by the first terminal device is 5 MHz, in other words, the first channel bandwidth may also be 5 MHz.

In a possible implementation, the first bandwidth may be determined based on a positive integer multiple of the bandwidth supported by the first terminal device. For example, the first bandwidth is determined based on a positive integer multiple of 5 MHz. The bandwidth supported by the first terminal device may be a first transmission bandwidth, and the first transmission bandwidth is a quantity of resource blocks corresponding to the first channel bandwidth at a different subcarrier spacing. For example, a correspondence between a first channel bandwidth and a first transmission bandwidth at a different subcarrier spacing is shown in Table 1.

When a subcarrier spacing is 15 kHz, a first transmission bandwidth corresponding to a bandwidth of 5 MHz is 25 RBs. Correspondingly, the first bandwidth may be determined based on a positive integer multiple of 25 RBs, for example, 25 RBs, 50 RBs, 75 RBs, or 100 RBs. For another example, when a subcarrier spacing is 30 kHz, a first transmission bandwidth corresponding to 5 MHz is 11 RBs, and the first bandwidth may be determined based on a positive integer multiple of 11 RBs. For another example, the first bandwidth may be determined based on a positive integer multiple of 10 RBs. For another example, when a subcarrier spacing is 60 kHz, a first transmission bandwidth corresponding to 10 MHz is 11 RBs. In this case, the bandwidth may be determined based on a positive integer multiple of 11 RBs.

**Table 1 Table of a relationship between a subcarrier spacing and a quantity of RBs corresponding to a bandwidth supported by the first terminal device**

| Subcarrier spacing (kHz) | 5 MHz | 10 MHz | 15 MHz | 20 MHz |
|---|---|---|---|---|
| | First transmission bandwidth (a quantity of RBs) | First transmission bandwidth (a quantity of RBs) | First transmission bandwidth (a quantity of RBs) | First transmission bandwidth (a quantity of RBs) |
| 15 | 25 | 52 | 79 | 106 |
| 30 | 11 | 24 | 38 | 51 |
| 60 | N/A | 11 | 18 | 24 |

It should be understood that Table 1 is merely an example. This is not limited in this application.

In a possible implementation, when the location of the first resource is determined based on the first reference point and the first offset, a method for determining the first offset is the same as the method in the foregoing embodiment, and details are not described herein again.

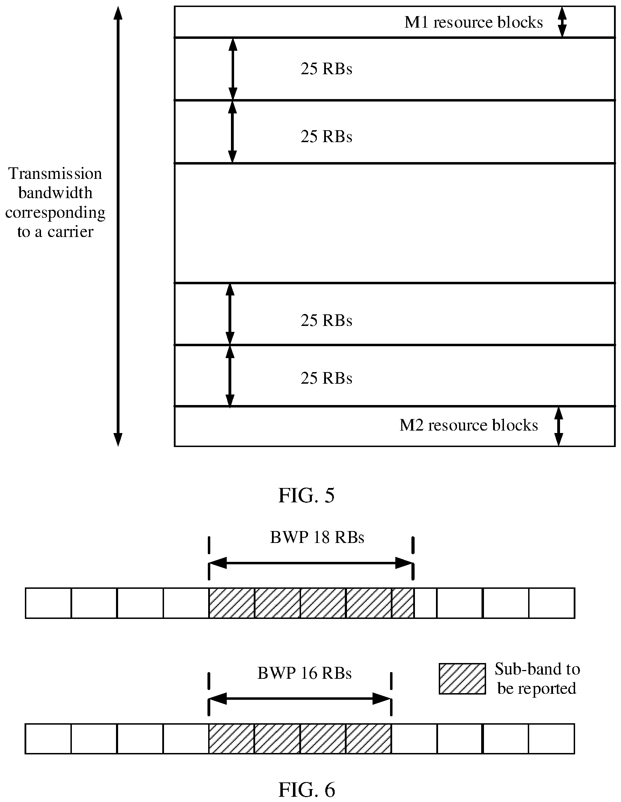

In another possible implementation, when the bandwidth supported by the first terminal device is the first transmission bandwidth, a resource block other than a positive integer multiple of the first transmission bandwidth is used to send a first control channel. The resource block other than the positive integer multiple of the first transmission bandwidth includes a first transmission resource and/or a second transmission resource. As shown in FIG. 5, the first transmission resource is M1 resource blocks with a smallest index in a second resource, and the second transmission resource is M2 resource blocks with a largest index in the second resource, where M1 and M2 each are a positive integer, and the second resource is a BWP of a second-type terminal device or a carrier bandwidth corresponding to a different subcarrier spacing.

For example, the first control channel may include first-hop transmission of a PUCCH for feeding back a Msg4, or may be second-hop transmission of a PUCCH for feeding back a Msg4. The first control channel may alternatively be first-hop transmission and second-hop transmission of a PUCCH for feeding back a Msg4.

Specifically, when a subcarrier spacing is 15 kHz, the first transmission bandwidth corresponding to 5 MHz is 25 RBs, a quantity of RBs corresponding to a maximum channel bandwidth 50 MHz is 270 RBs, a positive integer multiple of the first transmission bandwidth is used as the first bandwidth, and the positive integer multiple of the first transmission bandwidth is used as the first offset. For example, the first bandwidth may be 25 RBs, and the first offset may be 25 RBs. When a subcarrier spacing is 15 kHz, a maximum of 10 first bandwidths and a total of 250 RBs can be configured, a quantity of RBs corresponding to the maximum channel bandwidth 50 MHz is 270 RBs, and remaining 20 RBs are distributed at two ends of a carrier. In this case, the first transmission resource may be M1 resource blocks with a smallest index in the second resource, and the second transmission resource may be M2 resource blocks with a largest index in the second resource.

In the foregoing solution, the first bandwidth is used as a granularity. In one aspect, an optional range of the bandwidth can be greatly reduced, and in another aspect, the bandwidth can be used as a minimum bandwidth configured when energy consumption of UE is reduced.

In a possible implementation, the first resource and/or the first offset are/is determined based on the sub-band size reported by the CSI.

For example, the sub-band size reported by the CSI is a multiple of 4 RBs. For example, the network device determines the first bandwidth based on the sub-band size reported by the CSI. The first bandwidth may be the multiple of 4 RBs. As shown in FIG. 6, the first bandwidth may be 4 RBs, or may be 8 RBs, 16 RBs, or the like. For another example, the network device determines the first offset based on the sub-band size reported by the CSI. The first offset may be the multiple of 4 RBs, and may be 4 RBs, 8 RBs, 16 RBs, or the like.

Compared with that in a bandwidth that is not the multiple of 4 RBs, a quantity of sub-bands reported by the UE is reduced, and reporting complexity of the UE is reduced.

In a possible implementation, the first resource and/or the first offset are/is determined based on the sub-band size reported by the CSI and a resource allocation granularity of a control resource set. The first resource and/or the first offset may be determined based on a common multiple of the sub-band size reported by the CSI and the resource allocation granularity of the control resource set. For example, the sub-band size reported by the CSI may be 4 RBs, and the resource allocation granularity of the CORESET may be 6 RBs. The common multiple of the foregoing two quantities of RBs, for example, a multiple of 12 RBs, may be used as the first bandwidth and/or the first offset.

In a possible implementation, the first resource and/or the first offset may be determined based on the sub-band size reported by the CSI and a granularity of a resource block group. The first resource and/or the first offset are/is determined based on a common multiple of the sub-band size reported by the CSI and the granularity of the resource block group. For example, the sub-band size reported by the CSI may be 4 RBs, and the resource block group may include RBs whose quantity is a power of 2. A common multiple of the quantities of RBs included in the foregoing two items, for example, RBs whose quantity is a multiple of 4, may be used as the first bandwidth and/or the first offset

In another possible implementation, the first resource and/or the first offset are/is determined based on the sub-band size reported by the CSI, a resource allocation granularity of a control resource set, and a granularity of a resource block group. The first resource and/or the first offset are/is determined based on a common multiple of the sub-band size reported by the CSI, the resource allocation granularity of the control resource set, and the granularity of the resource block group. For example, the sub-band size reported by the CSI may be 4 RBs, the resource allocation granularity of the CORESET may be 6 RBs, the resource block group may include RBs whose quantity is a power of 2. A common multiple of the quantities of RBs included in the foregoing several items, for example, RBs whose quantity is a multiple of 12, may be used as the first bandwidth and/or the first offset.

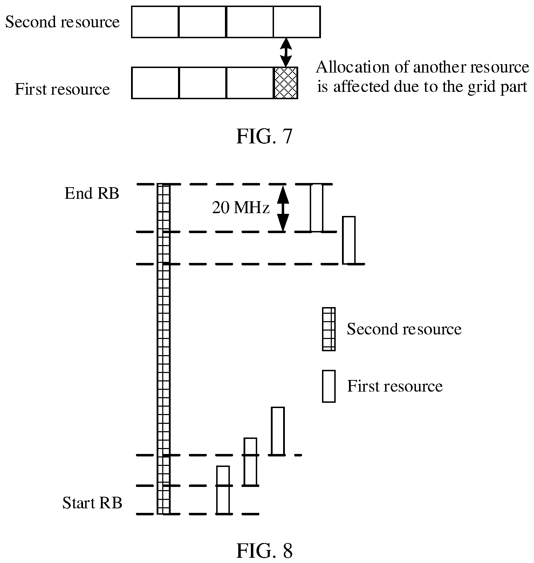

In the foregoing solution, the bandwidth of the first resource is determined based on the sub-band size reported by the CSI. This resolves a problem that a mismatch between a sub-band and the bandwidth of the first resource causes an increase in a quantity of sub-bands reported by the UE, adds the resource allocation granularity of the CORESET and the resource block group as a basis for configuring the first bandwidth, avoids a waste of resources due to a mismatch between the first bandwidth and the sub-band size reported by the CSI, resource allocation of the CORESET, and resource allocation of a data channel type 0, and as shown in FIG. 7, reduces complexity of reporting the CSI by the UE.

It should be understood that the foregoing solution may be mutually combined with the foregoing implementations. For example, in a range of 25 RBs, a multiple of 12 may be used as the first offset, for example, 24 RBs, to avoid the mismatch described above, and reduce a bandwidth indication range.

In a possible implementation, the first bandwidth and the first offset in the foregoing embodiment may be associated with the subcarrier spacing. There is a first association relationship between the first bandwidth and the subcarrier spacing; and/or there is a second association relationship between the first offset and the subcarrier spacing. For example, the first association relationship may be that a larger subcarrier spacing indicates a smaller first bandwidth. For another example, the second association relationship may be that a larger subcarrier spacing indicates a smaller first offset. Alternatively, the first association relationship may be that a larger subcarrier spacing indicates a proportional decrease in a size of the first resource. For another example, the second association relationship may be that a larger subcarrier spacing indicates a proportional decrease in the first offset.

For example, for 15 kHz, the first offset may be 24 RBs; for 30 kHz, the first offset may be 12 RBs; or for 60 kHz, the first offset may be 6 RBs. For example, for 15 kHz, the first offset may be 24 RBs; for 30 kHz, the first offset may be 6 RBs; or for 60 kHz, the first offset may be 4 RBs. For example, for 15 kHz, the first offset may be 12 RBs; for 30 kHz, the first offset may be 6 RBs; or for 60 kHz, the first offset may be 4 RBs.

In this solution, it is considered that quantities of RBs included in a same bandwidth are different when subcarrier spacings are different. When NR supports different subcarrier spacings, the first resource may also be configured by using the solution in this application.

In a possible implementation, the first terminal device determines the first resource based on the first reference point.

For example, the first terminal device may receive indication information, where the indication information indicates the first reference point, and the first reference point may be one or more of a first RB of the second resource, a center frequency or a center subcarrier of the second resource, a last RB of the second resource, a common resource block 0, and a point A. The indication information may be carried in the SIB 1 or a PDCCH for scheduling the SIB 1.

The second resource is a resource configured for the second-type terminal device, and a quantity of resource blocks included in the second resource can be greater than a quantity of resource blocks corresponding to the maximum channel bandwidth of the first terminal device. For example, the second resource is a carrier bandwidth or a quantity of RBs corresponding to a carrier at different subcarrier spacings, or the second resource may be a BWP of the second-type terminal device.

It should be understood that the first terminal device may alternatively determine the first reference point in a predefined manner. The first reference point may be one or more of a first RB of the second resource, a center frequency or a center subcarrier of the second resource, a last RB of the second resource, a common resource block 0, and a point A.

In a possible implementation, locations of the start RB and the end RB of the second resource may be indicated by using signaling. As shown in FIG. 8, two candidate bandwidths in a plurality of candidate bandwidths are the end RBs of the second resource and used as the reference points, and other three candidate bandwidths are the start RBs of the second resource and used as the reference points.

In another possible implementation, a location of the start RB or the end RB of the second resource may be indicated by using signaling, and candidate bandwidths are sequentially determined by using indicated reference points.

It should be understood that the quantity herein, and the correspondence between the quantity and the start RB and the correspondence between the quantity and the end RB are merely examples, and are not limited herein.

In another possible implementation, a CRB 0 (point A) may be used as a reference point, and a start point of the first resource is determined based on the reference point.

In this solution, the reference point is provided for configuring the first resource, to avoid a waste, of resources, caused when the first resource occupies less than one RB in some frequency domain.

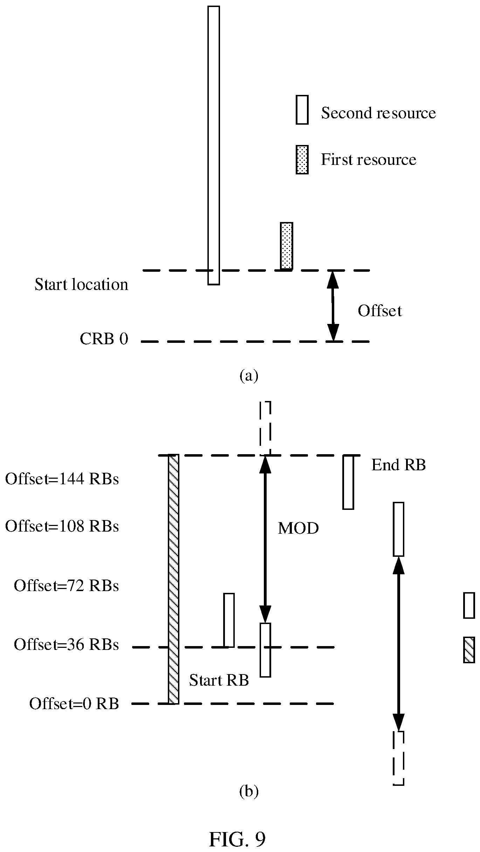

In still another possible implementation, when the first terminal device and the second terminal device share a BWP, the reference point is determined by jointly considering a location of the second resource and a start location of the CRB, and a frequency location aligned with the CRB resource may be used as the reference point. For example, as shown in (a) in FIG. 9, the reference point is not necessarily a location of a start RB or an end RB of the second resource.

This solution can flexibly determine the start location of the first resource, reduce indication overheads, and avoid a resource allocation mismatch.

In yet another possible implementation, a frequency domain offset of the first resource is configured based on one or more of the sub-band size (sub-band size) reported by the CSI, the resource allocation granularity of the CORESET, the resource block group (RBG), the subcarrier spacing, and a minimum channel bandwidth supported by the first terminal device. The offset may be an RB offset of the start location of the first resource relative to the location of the second resource.

For example, as shown in (b) in FIG. 9, when the first reference point (start_RB) is a location of the start RB of the second resource, the start location of the first resource may be MOD(start_RB+first offset, BW).

When the start_RB is a location of the end RB of the second resource, the start location of the first resource may be MOD(start_RB+first offset, BW), or MOD(BW, start_RB-first offset). The BW is a bandwidth of the second resource or a carrier bandwidth.

The first reference point and the first offset may be determined by using the solution in the foregoing embodiment, and details are not described herein again. For example, the first offset may be an integer multiple of 25 RBs, a location of an RB of start_RB+first offset may be index*25, and indexes are {0, 1, 2, 3, 4, 5, 6, 7, 8, 9, 10}.

If the first offset is not indicated, the start_RB is used as the start location of the first resource by default.

The first terminal device receives second information sent by the network device, where the second information indicates at least two of the first bandwidth, the first reference point, and the first offset. That is, the network device jointly encodes the at least two of the first bandwidth, the first reference point, and the first offset. For example, optionally, the first bandwidth may be 5 MHz, 10 MHz, or 20 MHz (or 25 RBs, 50 RBs, or 100 RBs), and the first offset is an integer multiple of 25 RBs. In this case, 30 states need to be indicated in total, and 5 bits are required.

In this solution comprehensively considers indication complexity and flexibility, and can reduce bit overheads for the first resource, and reduce computing complexity of the UE.

In another embodiment of this application, the first reference point is used as a reference point of the location of the first bandwidth, and may be the location of a first random access resource. In other words, the location of the first resource is determined based on a location of the first random access resource, and the first terminal device sends first uplink information on the first resource.

A size of the first resource (namely, the first bandwidth) is equal to or less than the maximum channel bandwidth supported by the first terminal device, and the first random access resource is a random access resource available to the first terminal device. The random access resource available to the first terminal device may be a random access resource configured by the network device for the first terminal device.

Specifically, the first uplink information includes all uplink information sent in a random access phase; or the first uplink information includes one or more of first transmission of a PUSCH carrying a Msg3 (initial transmission of the Msg3), first-hop transmission of the first transmission of the PUSCH carrying the Msg3 (first-hop transmission of the initial transmission of the Msg3), transmission after the first transmission of the PUSCH carrying the Msg3 (transmission after the initial transmission of the Msg3, including retransmission of the Msg3 or repetition of the Msg3), first-hop transmission of the transmission after the first transmission of the PUSCH carrying the Msg3 (first-hop transmission of the transmission after the initial transmission of Msg3), first transmission of the PUCCH of the Msg4 (initial transmission of the PUCCH of the Msg4), first-hop transmission of the first transmission of the PUCCH of the Msg4 (first-hop transmission of the initial transmission of the PUCCH of the Msg4), transmission after the first transmission of the PUCCH of the Msg4 (transmission after the initial transmission of the PUCCH of the Msg4), first-hop transmission of the transmission after the first transmission of the PUCCH of the Msg4 (first-hop transmission of the transmission after the initial transmission of the PUCCH of the Msg4).

The location of the first random access resource includes a first RB of the first random access resource; or the location of the first random access resource includes a last RB of the first random access resource; or the location of the first random access resource includes a center RB of the first random access resource; or the location of the first random access resource includes a first subcarrier of a first RB of the first random access resource; or the location of the first random access resource includes a first subcarrier of a last RB of the first random access resource; or the location of the first random access resource includes a first subcarrier of a center RB of the first random access resource; or the location of the first random access resource includes a last subcarrier of a first RB of the first random access resource; or the location of the first random access resource includes a last subcarrier of a last RB of the first random access resource; or the location of the first random access resource includes a last subcarrier of a center RB of the first random access resource.

It should be understood that a size of the first random access resource may be predefined.

The location of the first resource includes a first RB of the first resource; or the location of the first resource includes a last RB of the first resource; or the location of the first resource includes a center RB of the first resource; or the location of the first resource includes a first subcarrier of a first RB of the first resource; or the location of the first resource includes a first subcarrier of a last RB of the first resource; or the location of the first resource includes a first subcarrier of a center RB of the first resource; or the location of the first resource includes a last subcarrier of a first RB of the first resource; or the location of the first resource includes a last subcarrier of a last RB of the first resource; or the location of the first resource includes a last subcarrier of a center RB of the first resource.

In this application, a first location is used to represent a reference location of the first resource.

It should be understood that the location of the first random access resource may be predefined, or may be indicated by using signaling.

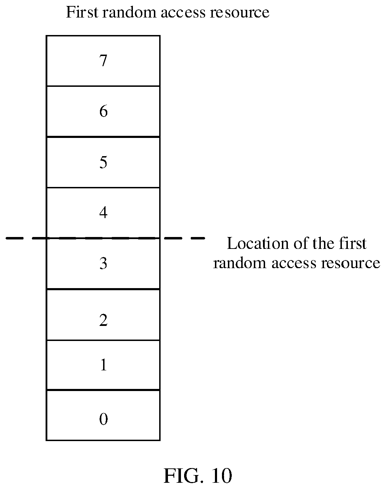

For example, the first terminal device determines the location of the first resource based on the predefined location of the first random access resource. For example, the predefined location of the first random access resource may be a location of an n^{th} random access resource, and an index corresponding to the random access resource is n-1, where n is a positive integer. As shown in FIG. 10, the predefined location of the first random access resource may be a last RB or a last subcarrier of a last RB of a fourth random access resource. Alternatively, the predefined location of the first random access resource may be a first RB or a first subcarrier of a first RB of a fifth random access resource. The predefined location of the first random access resource is used as a start location of the location of the first resource. The first RB or the first subcarrier of the first RB of the fifth random access resource is determined as a first RB or a first subcarrier of a first RB of the first resource. The predefined location of the first random access resource is used as an end location of the location of the first resource.

The location of the first random access resource may also be indicated by using first signaling. The first signaling may be carried in one of a system information block 1 (SIB 1), DCI for scheduling the SIB 1, a random access response (Random access response, RAR), DCI for scheduling an RAR, an uplink grant for scheduling the Msg3, the Msg3, a contention resolution message, and DCI for scheduling the contention resolution message. The first signaling may also be a bit or a bit state of the foregoing information.

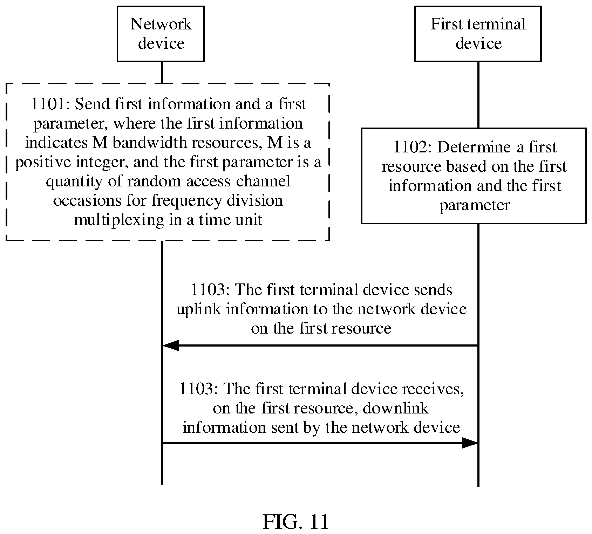

An embodiment of this application provides an information transmission method, as shown in FIG. 11.

1101: A network device sends first information and a first parameter to a first terminal device, where the first information indicates M bandwidth resources, M is a positive integer, the first parameter is a quantity of random access channel occasions for frequency division multiplexing in a time unit, the first terminal device is a first-type terminal device, and a size of each of the M bandwidth resources is equal to or less than a maximum channel bandwidth supported by the first terminal device.

It should be understood that 1101 is optional, and the first information and the first parameter may also be predefined.

1102: The first terminal device obtains the first information and the first parameter, and the first terminal device determines a first bandwidth resource based on the first information and the first parameter.

It should be understood that the first information may be system information, for example, a system information block 1 (system information block 1, SIB 1).

1103: The first terminal device sends uplink information or receives downlink information on the first bandwidth resource.

Specifically, the first parameter may be included in random access channel configuration information.

The random access channel configuration information may further include other information of a PRACH. For example, the random access channel occasion is a PRACH transmission occasion, and the first terminal device sends a random access preamble in the PRACH transmission occasion. For another example, a slot in which the first terminal device can send the PRACH can include one or more PRACH transmission occasions in time domain, and each PRACH transmission occasion is one time unit.

The first parameter may indicate a quantity of PRACH transmission occasions for frequency division multiplexing in one PRACH occasion. One slot may include one or more time units. When one slot includes a plurality of time units, one time unit may be s symbols, and s is a positive integer greater than 1. In this case, the first parameter may indicate a quantity of PRACH transmission occasions for frequency division multiplexing in frequency in one time unit. A value of the first parameter may be 1, 2, 4, 8, or the like.

For example, if the value of the first parameter is 8, there are eight random access channel occasions for frequency division multiplexing in one time unit, and indexes of the eight random access channel occasions may be arranged as 0 to 7 in ascending order of frequency resources.

In a possible implementation, a size of each of the M bandwidth resources may be predefined, or may be indicated by the network device. For example, a size of each bandwidth resource may be 5 MHz, or a quantity of RBs corresponding to 5 MHz in different subcarrier spacings, or 10 MHz, or a quantity of RBs corresponding to 10 MHz in different subcarrier spacings, or 20 MHz, or a quantity of RBs corresponding to 20 MHz in different subcarrier spacings.

In a possible implementation, when M=2, one of the two bandwidth resources includes resources of random access channel occasions {0, 1, 2, 3}, and the other bandwidth resource includes resources of random access channel occasions {4, 5, 6, 7}. On a basis that each of the two bandwidth resources does not exceed the maximum channel bandwidth supported by the first terminal device, the two bandwidth resources can include the resources of all the random access channel occasions, and the first terminal device can determine, based on the bandwidth resources, a center frequency for sending a PRACH. This can reduce a quantity of frequency tuning times.

In another possible implementation, when M>1, the first terminal device may obtain first signaling, where the first signaling indicates the first bandwidth resource in the M bandwidth resources; and determine other (M-1) bandwidth resources in the M bandwidth resources based on the first bandwidth resource.

For example, the first bandwidth resource is a bandwidth resource at a lowest location when the frequency resources are sorted in ascending order of locations. The first bandwidth resource may be configured by configuring a start location and a resource size. The remaining (M-1) bandwidth resources may be sequentially sorted by using an end resource block of the first bandwidth resource as a start resource block. In this way, the M bandwidth resources can be sequentially determined. A configuration of the bandwidth resource is more flexible without considering a location of an RO.

In a possible implementation, when the value of the first parameter is greater than 4 and M=1, the bandwidth resource is a first bandwidth resource of the first terminal device, the first bandwidth resource may include predefined resources of N random access channel occasions, and the random access channel occasions whose quantity is the first parameter include the N random access channel occasions, where N is a positive integer.

For example, if the value of the first parameter is 8, and the first information indicates that only one bandwidth resource is configured for the first terminal device, the bandwidth resource is the first bandwidth resource of the first terminal device. The first bandwidth resource may include the predefined resources of the N random access channel occasions, and the resources of the N random access channel occasions belong to random access channel occasions whose quantity is the first parameter, where N is a positive integer. The predefined resources of the N random access channel occasions may be resources of N lower random access channel occasions sorted in ascending order of frequency resource locations. Specifically, N=4, and the value of the first parameter may be 8. The predefined resources of the N random access channel occasions need to include a resource of a random access channel occasion on which a random access preamble is transmitted. This solution can reduce bit overheads, ensure that frequency tuning does not need to be performed for transmission of the random access preamble, and reduce a quantity of frequency tuning times. For example, the first bandwidth resource is determined based on the resource of the random access channel occasion on which the random access preamble is transmitted. The first bandwidth resource is a resource that starts with a first RB or a first subcarrier of a first RB of the resource of the random access channel occasion on which the random access preamble is transmitted; or the first bandwidth resource is determined based on the resource of the random access channel occasion on which the random access preamble is transmitted; or the first bandwidth resource is a resource that ends with a last RB or a last subcarrier of a last RB of the resource of the random access channel occasion on which the random access preamble is transmitted. A possible scenario of this solution is as follows: The first-type terminal device and a second-type terminal device receive same system information, receive a same first parameter, and configure only one bandwidth resource.

It should be understood that the scenario is an example. This is not limited in this application.

In a possible implementation, when the value of the first parameter is greater than 4 and M=1, the bandwidth resource is a first bandwidth resource of the first terminal device, and the first terminal device further obtains first indication information, where the first indication information may indicate a first random access channel occasion. A start resource block of the first bandwidth resource is the same as a start resource block of the first random access channel occasion. For example, if the value of the first parameter is 8, and the first information indicates that only one bandwidth resource is configured for the first terminal device, the bandwidth resource is the first bandwidth resource of the first terminal device. The start resource block of the first bandwidth resource may be determined based on the first indication information. For example, the first random access channel occasion is a random access channel occasion whose index is r, where r is an integer greater than or equal to 0. That the start resource block of the first bandwidth resource is the same as the start resource block of the first random access channel occasion may also be understood as that a frequency location of the start resource block of the first bandwidth resource is aligned with a frequency location of the start resource block of the first random access channel occasion. For example, N=4, and the value of the first parameter may be 8. A possible scenario of this solution is as follows: The first-type terminal device and a second-type terminal device receive same system information, receive a same first parameter, and configure only one bandwidth resource.

For example, the first indication information may include one bit, and the first indication information may indicate an index of the first random access channel occasion in random access channel occasion indexes {0, 4}. If the first indication information indicates an index 0, the first bandwidth resource may include resources whose random access channel occasion indexes are {0, 1, 2, 3}. If the first indication information indicates an index 4, the first bandwidth resource may include resources whose random access channel occasion indexes are {4, 5, 6, 7}. For example, the first bandwidth resource is indicated based on the resource of the random access channel occasion on which the random access preamble is transmitted. The first bandwidth resource is a resource that starts with a first RB or a first subcarrier of a first RB of the resource of the random access channel occasion on which the random access preamble is transmitted; or the first bandwidth resource is determined based on the resource of the random access channel occasion on which the random access preamble is transmitted; or the first bandwidth resource is a resource that ends with a last RB or a last subcarrier of a last RB of the resource of the random access channel occasion on which the random access preamble is transmitted. Two possible locations of the first bandwidth resource indicated in this solution can include resources of all the random access channel occasions. This can ensure that frequency tuning does not need to be performed for transmission of the random access preamble, and reduce a quantity of frequency tuning times.

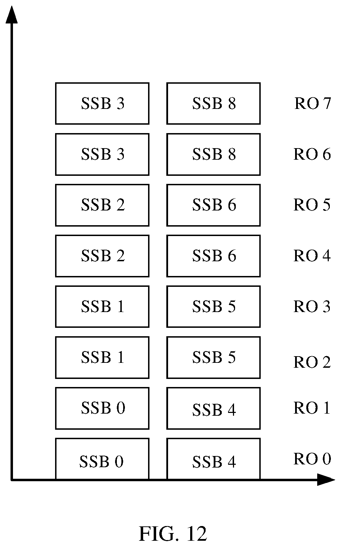

Indexes of ROs are shown in FIG. 12.

For example, the first indication information may include two bits, and the first indication information indicates an index of the first random access channel occasion in random access channel occasion indexes {1, 2, 3, 4}. If the first indication information indicates an index 1, the first bandwidth resource may include resources whose random access channel occasion indexes are { 1, 2, 3, 4}. If the first indication information indicates an index 2, the first bandwidth resource may include resources whose random access channel occasion indexes are {2, 3, 4, 5}. If the first indication information indicates an index 3, the first bandwidth resource may include resources whose random access channel occasion indexes are {3, 4, 5, 6}. If the first indication information indicates an index 4, the first bandwidth resource may include resources whose random access channel occasion indexes are {4, 5, 6, 7}. Four possible locations of the first bandwidth resource indicated in this solution can include resources of all the random access channel occasions. This can ensure that frequency tuning does not need to be performed for transmission of the random access preamble, reduce a quantity of frequency tuning times, and have more flexible indications.

For example, the first indication information may further include three bits, and the first indication information indicates an index of the first random access channel occasion in random access channel occasion indexes {0, 1, 2, 3, 4}. If the first indication information indicates an index 0, the first bandwidth resource may include resources whose random access channel occasion indexes are {0, 1, 2, 3}. If the first indication information indicates an index 1, the first bandwidth resource may include resources whose random access channel occasion indexes are {1, 2, 3, 4}. If the first indication information indicates an index 2, the first bandwidth resource may include resources whose random access channel occasion indexes are {2, 3, 4, 5}. If the first indication information indicates an index 3, the first bandwidth resource may include resources whose random access channel occasion indexes are {3, 4, 5, 6}. If the first indication information indicates an index 4, the first bandwidth resource may include resources whose random access channel occasion indexes are {4, 5, 6, 7}. Five possible locations of the first bandwidth resource indicated in this solution can include resources of all the random access channel occasions. This can ensure that frequency tuning does not need to be performed for transmission of the random access preamble, reduce a quantity of frequency tuning times, and have more flexible indications.

For example, the first indication information includes three bits, and the first indication information may further indicate an index of the first random access channel occasion in random access channel occasion indexes {0, 1, 2, 3, 4, 5, 6, 7}. If the first indication information indicates an index 0, the first bandwidth resource may include resources whose random access channel occasion indexes are {0, 1, 2, 3}. If the first indication information indicates an index 1, the first bandwidth resource may include resources whose random access channel occasion indexes are {1, 2, 3, 4}. If the first indication information indicates an index 2, the first bandwidth resource may include resources whose random access channel occasion indexes are {2, 3, 4, 5}. If the first indication information indicates an index 3, the first bandwidth resource may include resources whose random access channel occasion indexes are {3, 4, 5, 6}. If the first indication information indicates an index 4, the first bandwidth resource may include resources whose random access channel occasion indexes are { 4, 5, 6, 7}. If the first indication information indicates an index 5, the first bandwidth resource may include resources whose random access channel occasion indexes are {5, 6, 7}. If the first indication information indicates an index 6, the first bandwidth resource may include resources whose random access channel occasion indexes are {6, 7}. If the first indication information indicates an index 7, the first bandwidth resource may include a resource whose random access channel occasion index is {7}. Eight possible locations of the first bandwidth resource indicated in this solution can include resources of all the random access channel occasions. This can ensure that frequency tuning does not need to be performed for transmission of the random access preamble, reduce a quantity of frequency tuning times, and have more flexible indications.

For example, an index of the first random access channel occasion may also be determined based on a case whether the first indication information exists. That the first indication information does not exist may also be understood as that the first terminal device does not obtain the first indication information. For example, the first indication information may be default. If the first indication information is default, the first random access channel occasion is a random access channel occasion whose index is 0. This solution may be combined with the foregoing embodiments. For example, this solution may be applied together with the case in which the first indication information may include two bits. If the first indication information is default, the first random access channel occasion is the random access channel occasion whose index is 0; or if the first indication information includes the two bits, the first indication information indicates the index of the first random access channel occasion in the random access channel occasion indexes { 1, 2, 3, 4}.

In a possible implementation, when the value of the first parameter is greater than 4 and M>1, each of the M bandwidth resources includes resources of one or more of the first parameter random access channel occasions, and the first terminal device determines the first bandwidth resource from the M bandwidth resources. A possible scenario of this solution is as follows: The first-type terminal device and a second-type terminal device receive same system information, receive a same first parameter, and configure a plurality of bandwidth resources.

It should be understood that the scenario is an example. This is not limited in this application.

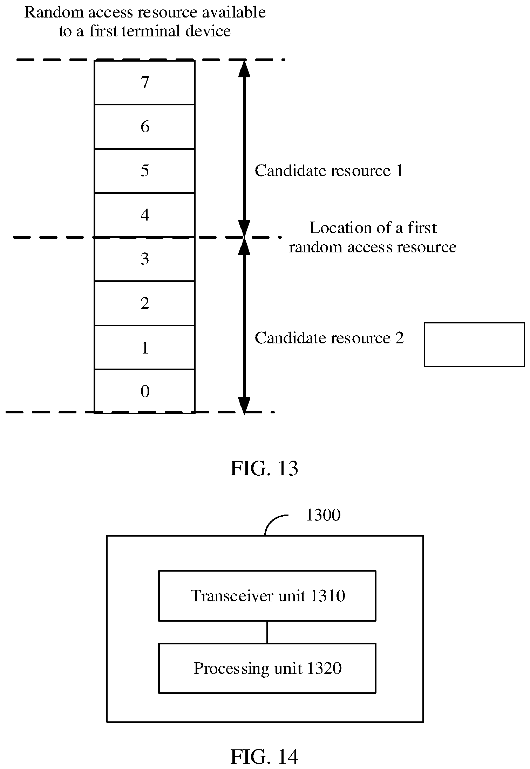

It may be understood that different bandwidth resources in the M bandwidth resources include different resources of the random access channel occasions. For example, the value of the first parameter is 8, and the first information is that two bandwidth resources are configured for the first terminal device. Each of the two bandwidth resources includes one or more of the eight random access channel occasions. For example, as shown in FIG. 13, one of the two bandwidth resources includes resources of random access channel occasions whose index are {0, 1, 2, 3 }, and the other bandwidth resource includes resources of random access channel occasions whose indexes are {4, 5, 6, 7}. The first terminal device may determine the first bandwidth resource from the two bandwidth resources. The first bandwidth resource may be bandwidth resources whose indexes are {0, 1, 2, 3}, or may be bandwidth resources whose indexes are {4, 5, 6, 7}. The first bandwidth resource may be determined based on a resource of a random access channel occasion on which a random access preamble is transmitted. This solution can reduce bit overheads, ensure that frequency tuning does not need to be performed for transmission of the random access preamble, and reduce a quantity of frequency tuning times.

In a possible implementation, the first terminal device receives second indication information, where the second indication information may indicate a second bandwidth resource in the M bandwidth resources. The second bandwidth resource may be different from the first bandwidth resource. That is, a resource of a random access channel occasion included in the second bandwidth resource is not totally the same as the resource of the random access channel occasion included in the first bandwidth resource. Alternatively, the second bandwidth resource may be the same as the first bandwidth resource. That is, a resource of a random access channel occasion included in the second bandwidth resource is the same as the resource of the random access channel occasion included in the first bandwidth resource.

Specifically, the second indication information may be carried by one or more of a random access response (Random access response, RAR) message, downlink control information for scheduling a random access response message, a contention resolution message (a Msg4), and downlink control information for scheduling a contention resolution message, and/or the second indication information is included in an uplink grant (UL grant) of each media access control random access response (MAC RAR) in a random access response message. The second indication information may indicate a second channel bandwidth for each terminal device in the first-type terminal device, and the second indication information may be included in the UL grant of the MAC RAR.

The second indication information may indicate second channel bandwidth resources for a group of terminal devices in the first-type terminal devices, and the second indication information may be included in the RAR, the DCI for scheduling the RAR, the Msg4, and the DCI for scheduling the Msg4.

The second indication information may be separately carried in two types of information. For example, the second indication information is carried in both the DCI for scheduling the Msg4 and the UL grant for scheduling the MAC RAR, to indicate the first terminal device to send, on the second bandwidth resource, a message 3 in a random access process or send a physical uplink control channel for feeding back the contention resolution message.

For example, the first terminal device sends the random access preamble on the first bandwidth resource. The first terminal device sends, on the second bandwidth resource, the message 3 in the random access process or the physical uplink control channel for feeding back the contention resolution message.

A bandwidth resource for the first terminal device to send the random access preamble may be different from a bandwidth resource for the first terminal device to send the message 3 in the random access process. A bandwidth resource for the first terminal device to send the random access preamble may be different from a bandwidth resource used by the first terminal device to send the physical uplink control channel for feeding back the contention resolution message. A bandwidth resource for the first terminal device to send the random access preamble may be different from a bandwidth resource for the first terminal device to send the message 3 in the random access process and the physical uplink control channel for feeding back the contention resolution message. A bandwidth resource used by the first terminal device to send the message 3 in the random access process may be different from a bandwidth resource for the first terminal device to send the physical uplink control channel for feeding back the contention resolution message. For example, fifth indication information may be carried in one or more of an RAR, DCI for scheduling the RAR, a Msg4, DCI for scheduling the Msg4, and a UL grant of a MAC RAR, to indicate a third bandwidth resource. The first terminal device sends, on the second bandwidth resource, the message 3 in the random access process, and the first terminal device sends, on the third bandwidth resource, the physical uplink control channel for feeding back the contention resolution message. The third bandwidth resource is the same as or different from the first bandwidth resource, and the third bandwidth resource is the same as or different from the second bandwidth resource. For another example, if the first terminal device sends the random access preamble on the first bandwidth resource, and the second indication information is the DCI for scheduling the RAR and indicates the second bandwidth resource, the first terminal device sends, on the second bandwidth resource, the message 3 in the random access process, or sends the physical uplink control channel for feeding back the contention resolution message. For another example, the first terminal device may further receive the fifth indication information, where the fifth indication information is the DCI for scheduling the Msg4 and indicates the third bandwidth resource. In this case, the first terminal device sends, on the third bandwidth resource, the physical uplink control channel for feeding back the contention resolution message.

The first terminal device may send all uplink information on the first bandwidth resource. This can ensure that frequency tuning does not need to be performed in an uplink transmission process, and reduce a quantity of frequency tuning times. Alternatively, the first terminal device may send the random access preamble on the first bandwidth resource, and send, on the second bandwidth, the message 3 in the random access process and the physical uplink control channel for feeding back the contention resolution message. This can consider load balancing on the basis of reducing the quantity of frequency tuning times. Alternatively, the first terminal device may send the random access preamble on the first bandwidth resource, send, on the second bandwidth resource, first-hop transmission of the message 3 in the random access process, and send, on the third bandwidth resource, second-hop transmission of the message 3 in the random access process and the physical uplink control channel for feeding back the contention resolution message. This helps the first terminal device obtain a frequency diversity gain of the message 3 in the random access process. Alternatively, the first terminal device may send the random access preamble on the first bandwidth resource, send, on the second bandwidth resource, the message 3 in the random access process and first-hop transmission of the physical uplink control channel for feeding back the contention resolution message, and send, on the third resource, second-hop transmission of the physical uplink control channel for feeding back the contention resolution message. This helps achieve a frequency diversity gain of the physical uplink control channel, and resolve a resource fragment problem caused by resource allocation of the physical uplink control channel.

For example, the first terminal device sends the random access preamble on the first bandwidth resource, and the first terminal device receives third indication information. A resource for sending information by the first terminal device may be determined based on a bit status of the third indication information. The first terminal device only needs to detect the third indication information, to determine whether the second bandwidth resource/the third bandwidth resource exists. If the second bandwidth resource/the third bandwidth resource does not exist, the first terminal device does not need to detect configuration information. This reduces complexity of the terminal device.

For example, if the bit status of the third indication information is a first bit state, the first terminal device sends, on the first bandwidth resource, the message 3 in the random access process, and/or sends, on the first bandwidth resource, the physical uplink control channel for feeding back the contention resolution message; or if the bit status of the third indication information is a second bit state, the first terminal device sends, on the second bandwidth resource, the message 3 in the random access process, and/or sends, on the second bandwidth resource, the physical uplink control channel for feeding back the contention resolution message.

For another example, when a bit status of the third indication information is a second bit state, the first terminal device sends, on the second bandwidth resource, the message 3 in the random access process, and sends, on the third bandwidth resource, the physical uplink control channel for feeding back the contention resolution message.

For example, the third indication information may be identifier information, and the identifier information may be included in DCI or higher layer signaling. For example, the third indication information may be carried in one or more of an RAR, DCI for scheduling the RAR, a Msg4, DCI for scheduling the Msg4, and a UL grant of a MAC RAR. For example, the third indication information is the DCI for scheduling the RAR, and the third indication information is applied to an available bit in the DCI, to indicate a resource for the first terminal device to send information.

For example, when a bit status is a first bit state, a bandwidth resource for the first terminal device to send the message 3 in the random access process and/or send the physical uplink control channel for feeding back the contention resolution message is the same as the first bandwidth resource for the first terminal device to send the random access preamble.

For another example, when a bit status is a second bit state, a bandwidth resource for the first terminal device to send the message 3 in the random access process and/or send the physical uplink control channel for feeding back the contention resolution message is different from the first bandwidth resource for the first terminal device to send the random access preamble. For example, when a bit status is a second bit status, a bandwidth resource for the first terminal device to send the message 3 in the random access process and/or send the physical uplink control channel for feeding back the contention resolution message is different from the first bandwidth resource for the first terminal device to send the random access preamble.

In a possible implementation, an application of random access channel configuration information is associated with the value of the first parameter. When the value of the first parameter is greater than 4, the random access channel configuration information is used for the first-type terminal device and the second-type terminal device. When the value of the first parameter is less than or equal to 4, the random access channel configuration information is used only for the first-type terminal device.

For example, when the value of the first parameter is greater than 4, the random access channel configuration information cannot be used only for the first-type terminal device. Because the maximum channel bandwidth supported by the first-type terminal device is less than sizes of the resources of the random access channel occasions corresponding to the value, of the first parameter, greater than 4, when the value of the first parameter is greater than 4, the random access channel configuration information cannot be used only for the first-type terminal device. This facilitates coexistence of the first-type terminal device and the second-type terminal device in coverage of the same network device.

In a possible implementation, configurations of the M bandwidth resources are used only for the first-type terminal device. For example, the M bandwidth resources are M uplink BWPs or M downlink BWPs. For example, the configurations of the M bandwidth resources are independently configured for the first-type terminal device. That the configurations of the M bandwidth resources are independently configured for the first-type terminal device may be understood that the M bandwidth resources each are configured by using an independent field or an independent parameter. The independent field or the independent parameter is different from a field or a parameter corresponding to the second-type terminal device, or content configured in the independent field or the independent parameter is different from content configured in a field or a parameter corresponding to the second-type terminal device.

The downlink information includes one or more of the PDCCH for scheduling the SIB 1, the PDSCH carrying the SIB 1, the PDCCH for scheduling the SI, the PDSCH carrying the SI, the PDCCH for scheduling the Msg2, the PDSCH carrying the Msg2, the PDCCH for scheduling the Msg3, the PDCCH for scheduling the Msg4, and the PDSCH carrying the Msg4.

For example, when the random access channel configuration information is used for the first-type terminal device and the second-type terminal device, and the value of the first parameter is greater than 4, the first terminal device sends the uplink information or receives the downlink information on the first bandwidth resource. For example, the random access channel configuration information is configured by both the first-type terminal device and the second-type terminal device, that is, is not independently configured for the first-type terminal device. For example, the value of the first parameter is 8.

For example, when the random access channel configuration information is used for the first-type terminal device and the second-type terminal device, and the value of the first parameter is greater than 4, the first terminal device sends the uplink information or receives the downlink information on the second bandwidth resource. For example, the random access channel configuration information is configured by both the first-type terminal device and the second-type terminal device, that is, is not independently configured for the first-type terminal device.

For example, when the random access channel configuration information is used for the first-type terminal device and the second-type terminal device, and the value of the first parameter is less than or equal to 4, the first terminal device sends the uplink information or receives the downlink information on a bandwidth resource including random access channel occasions whose quantity is the first parameter. For example, the random access channel configuration information is configured by both the first-type terminal device and the second-type terminal device, that is, is not independently configured for the first-type terminal device. For example, the value of the first parameter is 1, 2, or 4. For example, the bandwidth resource of the random access channel occasions whose quantity is the first parameter may be a predetermined resource of the random access channel occasions whose quantity is the first parameter, or may be the first bandwidth resource determined by using the first indication information.

For determining of the first bandwidth resource and the second bandwidth resource, refer to the method in the foregoing embodiment. Details are not described herein again.

For example, the random access channel configuration information is used only by the first-type terminal device, the first information indicates the first bandwidth resource, and the first terminal device sends the uplink information or receives the downlink information on the first bandwidth resource. For example, the random access channel configuration information is independently configured for the first-type terminal device. For example, if the first bandwidth resource is configured in the system information, the first terminal device sends the uplink information or receives the downlink information on the first bandwidth resource.

In a possible implementation, the first terminal device obtains indication information, where the indication information indicates an association configuration between an SSB and the random access; and the first terminal device determines the association configuration between the SSB and the random access based on the indication information. The association configuration between the SSB and the random access may indicate a quantity of SSBs associated with one random access channel occasion (RO).

For example, the association configuration may be a first association configuration, or the association configuration is a second association configuration. For example, a first bit state of fourth indication information is the first association configuration, and a second bit state of the fourth indication information is the second association configuration. For example, the first association configuration is an association configuration between a new SSB and a random access channel occasion, that is, the first association configuration is different from an association configuration, between an SSB and a random access channel occasion, corresponding to the second-type terminal device.

For example, a type of the association configuration may be determined based on a case whether the indication information exists.

For example, if the indication information appears, the first terminal device determines that the association configuration between the SSB and the random access channel occasion is the first association configuration; or if the indication information does not appear, the first terminal device determines that the association configuration between the SSB and the random access channel occasion is the second association configuration. For example, the indication information is optionally configured. If the indication information is configured, that is, the indication information appears, the association configuration between the SSB and the random access channel occasion is the first association configuration; or if the indication information is not configured, that is, the indication information does not appear, the association configuration between the SSB and the random access channel occasion is the second association configuration. For example, the indication information is identifier information and includes 1 bit.

It should be understood that the foregoing correspondence between the indication information or the bit status of the indication information and the association configuration is merely an example. This is not limited in this application.

In this solution, for an FDD system or a TDD uplink/downlink decoupling system, RF retuning between uplink transmission in an initial access phase can be avoided by determining a frequency domain location and a bandwidth of the first resource.

In this application, a bandwidth resource for uplink sending or a bandwidth resource for downlink receiving is determined, so that a total frequency range in which two adjacent uplink sendings are performed or a total frequency range in which two adjacent downlink receivings are performed is within a maximum channel bandwidth range supported by the terminal device. This can avoid frequency tuning between frequent uplink sendings and/or frequency tuning between frequent downlink receivings, improve symbols available for data transmission, improve resource utilization, avoid increasing power consumption of UE, and reduce implementation complexity of the UE.

Embodiments described in this specification may be independent solutions, or may be combined based on internal logic. All these solutions fall within the protection scope of this application.

In the foregoing embodiments provided in this application, the methods provided in embodiments of this application are described from a perspective of interaction between devices. To implement functions in the method provided in the foregoing embodiments of this application, the network device or the terminal device may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

In this embodiment of this application, division into the modules is an example, and is merely logical function division. In actual implementation, another division manner may be used. In addition, functional modules in embodiments of this application may be integrated into one processor, or may exist alone physically, or two or more modules may be integrated into one module. The integrated module may be implemented in a form of hardware, or may be implemented in a form of a software functional module.

Same as the foregoing concept, as shown in FIG. 14, an embodiment of this application further provides an apparatus 1300, configured to implement a function of the network device or the terminal device in the foregoing methods. For example, the apparatus may be a software module or a chip system. In this embodiment of this application, the chip system may include a chip, or may include a chip and another discrete component. The apparatus 1300 may include a processing unit 1310 and a communication unit 1320.

In this embodiment of this application, the communication unit may also be referred to as a transceiver unit, and may include a sending unit and/or a receiving unit, which are respectively configured to perform sending and receiving steps of the network device or the terminal device in the foregoing method embodiments.

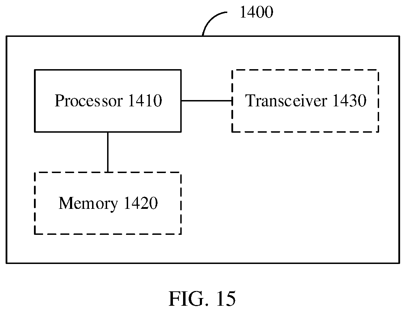

The following describes in detail communication apparatuses provided in embodiments of this application with reference to FIG. 14 and FIG. 15. It should be understood that descriptions of apparatus embodiments correspond to the descriptions of the method embodiments. Therefore, for content that is not described in detail, refer to the foregoing method embodiments. For brevity, details are not described herein again.

The communication unit may also be referred to as a transceiver, a transceiver machine, a transceiver apparatus, or the like. The processing unit may also be referred to as a processor, a processing board, a processing module, a processing apparatus, or the like. Optionally, a component that is in the communication unit 1320 and that is configured to implement a receiving function may be considered as a receiving unit, and a component that is in the communication unit 1320 and that is configured to implement a sending function may be considered as a sending unit. In other words, the communication unit 1320 includes the receiving unit and the sending unit. The communication unit sometimes may also be referred to as a transceiver machine, a transceiver, an interface circuit, or the like. The receiving unit sometimes may also be referred to as a receiver machine, a receiver, a receive circuit, or the like. The sending unit sometimes may also be referred to as a transmitter machine, a transmitter, a transmit circuit, or the like.

When the communication apparatus 1300 performs the function of the first terminal device in the procedure shown in any one of FIG. 2 to FIG. 13 in the foregoing embodiments,
the processing unit is configured to determine, based on downlink information of a network device or in a predefined manner, an information transmission resource; and
the communication unit is configured to receive and send information.

When the communication apparatus 1300 performs the function of the network device in the procedure shown in any one of FIG. 2 to FIG. 13 in the foregoing embodiments,
the processing unit is configured to configure a resource or determine a resource in a predefined manner; and
the communication unit is configured to receive and send information.

The foregoing is merely an example. The processing unit 1310 and the communication unit 1320 may further perform other functions. For more detailed descriptions, refer to related descriptions in the method embodiments shown in FIG. 2 to FIG. 13 or other method embodiments. Details are not described herein again.

FIG. 15 shows an apparatus 1400 according to an embodiment of this application. The apparatus shown in FIG. 15 may be an implementation of a hardware circuit of the apparatus shown in FIG. 14. The communication apparatus is applicable to the foregoing flowchart, and performs the functions of the terminal device or the network device in the foregoing method embodiments. For ease of description, FIG. 14 shows only main components of the communication apparatus.

As shown in FIG. 15, the communication apparatus 1400 includes a processor 1410 and an interface circuit 1420. The processor 1410 and the interface circuit 1420 are coupled to each other. It may be understood that the interface circuit 1420 may be a transceiver or an input/output interface. Optionally, the communication apparatus 1400 may further include a memory 1430, configured to store instructions to be executed by the processor 1410, store input data required for running instructions by the processor 1410, or store data generated after the processor 1410 runs instructions.

When the communication apparatus 1400 is configured to implement the methods shown in FIG. 2 to FIG. 13, the processor 1410 is configured to implement the function of the processing unit 1310, and the interface circuit 1420 is configured to implement the function of the communication unit 1320.

When the communication apparatus is a chip used in a terminal device, the chip in the terminal device implements the functions of the terminal device in the foregoing method embodiments. The chip in the terminal device receives information from another module (for example, a radio frequency module or an antenna) in the terminal device, where the information is sent by a network device to the terminal device. Alternatively, the chip in the terminal device sends information to another module (for example, a radio frequency module or an antenna) in the terminal device, where the information is sent by the terminal device to a network device.

When the communication apparatus is a chip used in a network device, the chip in the network device implements the functions of the network device in the foregoing method embodiments. The chip in the network device receives information from another module (for example, a radio frequency module or an antenna) in the network device, where the information is sent by a terminal device to the network device. Alternatively, the chip in the network device sends information to another module (for example, a radio frequency module or an antenna) in the network device, where the information is sent by the network device to a terminal device.

It can be understood that the processor in embodiments of this application may be a central processing unit (Central Processing Unit, CPU), or may be another general purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general purpose processor may be a microprocessor or any regular processor or the like.

In embodiments of this application, the processor may be a random access memory (Random Access Memory, RAM), a flash memory, a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), a register, a hard disk, a removable hard disk, a CD-ROM, or a storage medium in any other form well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a network device or a terminal device. Certainly, the processor and the storage medium may alternatively exist as discrete components in a network device or a terminal device.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general purpose computer, a dedicated computer, an embedded processor, or a processor of any other programmable data processing device to generate a machine, so that the instructions executed by a computer or a processor of any other programmable data processing device generate an apparatus for implementing a specific function in one or more procedures in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

It is clearly that, a person skilled in the art can make various modifications and variations to this application without departing from the scope of this application. This application is intended to cover these modifications and variations of this application provided that they fall within the scope of protection defined by the following claims and their equivalent technologies.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An information transmission method, comprising:
receiving, by a first terminal device, first information, wherein the first information indicates M bandwidth resources, M is a positive integer, the first terminal device is a first-type terminal device, and a size of each of the M bandwidth resources is equal to or less than a maximum channel bandwidth supported by the first terminal device;
receiving, by the first terminal device, a first parameter, wherein the first parameter is a quantity of random access channel occasions for frequency division multiplexing in a time unit;
determining, by the first terminal device, a first bandwidth resource from the M bandwidth resources based on the first information and the first parameter; and
sending, by the first terminal device, uplink information or receiving downlink information on the first bandwidth resource.

2. The method according to claim 1, wherein a value of the first parameter is greater than 4, and
when M=1, the M bandwidth resources are the first bandwidth resource, the first bandwidth resource comprises predefined resources of N random access channel occasions, the random access channel occasions whose quantity is the first parameter comprise the N random access channel occasions, and N is a positive integer; or
when M=1, the M bandwidth resources are the first bandwidth resource, a start resource block of the first bandwidth resource is the same as a start resource block of a first random access channel occasion, and the first random access channel occasion is indicated by first indication information; or
when M> 1, each of the M bandwidth resources comprises a resource corresponding to at least one random access channel occasion.

3. The method according to claim 1 or 2, wherein the value of the first parameter is 8, indexes of the random access channel occasions sorted in a first order are 0 to 7, and the first order comprises an ascending order of frequencies.

4. The method according to claim 3, wherein
the first terminal device further receives the first indication information, wherein when the first indication information comprises one bit, the first indication information indicates an index of the first random access channel occasion in indexes {0, 4}; or when the first indication information comprises two bits, the first indication information indicates an index of the first random access channel occasion in indexes {1, 2, 3, 4}; or when the first indication information comprises three bits, the first indication information indicates an index of the first random access channel occasion in indexes {0, 1, 2, 3, 4}; or when the first indication information comprises three bits, the first indication information indicates an index of the first random access channel occasion in indexes {0, 1, 2, 3, 4, 5, 6, 7}; or
when the first terminal device does not receive the first indication information, an index of the first random access channel occasion is 0.

5. The method according to any one of claims 1 to 4, wherein the first information indicates the M bandwidth resources; and
a size of each of the M bandwidth resources is predefined; or
when M=2, one bandwidth resource in the bandwidth resources comprises resources of random access channel occasions {0, 1, 2, 3}, and the other bandwidth resource in the bandwidth resources comprises resources of random access channel occasions {4, 5, 6, 7}; or
when M>1, remaining (M-1) bandwidth resources are determined based on a first candidate bandwidth resource, and the first candidate bandwidth resource is indicated by using first signaling.

6. The method according to claim 1, wherein when M>1, the method further comprises:
receiving, by the first terminal device, second indication information, wherein the second indication information indicates a second bandwidth resource;
sending, by the first terminal device, a random access preamble on the first bandwidth resource; and
sending, by the first terminal device on the second bandwidth resource, a message 3 in a random access process or a physical uplink control channel for feeding back a contention resolution message.

7. The method according to claim 6, wherein the second indication information is carried in one or more of a random access response message, downlink control information for scheduling the random access response message, a contention resolution message, and downlink control information for scheduling the contention resolution message; and/or
the second indication information is carried in an uplink grant of each media access control random access response in a random access response message.

8. The method according to claim 6 or 7, wherein the method further comprises:
sending, by the first terminal device, the random access preamble on the first bandwidth resource; and
receiving, by the first terminal device, third indication information, wherein the third indication information indicates a bandwidth resource for the first terminal device to send the message 3 in the random access process and/or the physical uplink control channel for feeding back the contention resolution message.

9. The method according to claim 8, wherein the method comprises:
when a bit status of the third indication information is a first bit state, sending, by the first terminal device on the first bandwidth resource, the message 3 in the random access process and/or the physical uplink control channel for feeding back the contention resolution message; or
when a bit status of the third indication information is a second bit state, sending, by the first terminal device on the second bandwidth resource, the message 3 in the random access process and/or the physical uplink control channel for feeding back the contention resolution message.

10. The method according to claim 1, wherein the method further comprises:
obtaining, by the first terminal device, fourth indication information, wherein the fourth indication information indicates that an association configuration between an SSB and a random access channel occasion is a first association configuration or a second association configuration, and the association configuration is an association configuration between a quantity of SSBs and a quantity of random access channel occasions.

11. The method according to claim 1, wherein the method further comprises:
if the first terminal device receives fourth indication information, the fourth indication information indicates that an association configuration between an SSB and a random access is a first association configuration; or if the first terminal device does not receive fourth indication information, an association configuration between an SSB and a random access is a second association configuration; or
if the first terminal device receives fourth indication information, the fourth indication information indicates that an association configuration between an SSB and a random access channel occasion is a second association configuration; or if the first terminal device does not receive fourth indication information, an association configuration between an SSB and a random access channel occasion is a first association configuration.

12. The method according to any one of claims 1 to 11, wherein the first parameter is carried in random access channel configuration information.

13. The method according to any one of claims 1 to 12, wherein the first information comprises system information.

14. An information transmission method, comprising:
sending, by a network device, first information to a first terminal device, wherein the first information indicates M bandwidth resources, M is a positive integer, a size of each of the M bandwidth resources is equal to or less than a maximum channel bandwidth supported by the first terminal device, and the first terminal device is a first-type terminal device;
sending, by the network device, a first parameter, wherein the first parameter is a quantity of random access channel occasions for frequency division multiplexing in a time unit; and
receiving, by the network device, uplink information sent by the first terminal device, or sending downlink information to the first terminal device on a first bandwidth resource, wherein the first bandwidth resource is determined by the first terminal device from the M bandwidth resources based on the first information and the first parameter.

15. The method according to claim 14, wherein a value of the first parameter is greater than 4, and
when M=1, the M bandwidth resources are the first bandwidth resource, the first bandwidth resource comprises predefined resources of N random access channel occasions, the random access channel occasions whose quantity is the first parameter comprise the N random access channel occasions, and N is a positive integer; or
when M=1, the network device sends first indication information, wherein the first indication information indicates a first random access channel occasion, a start resource block of the first bandwidth resource is the same as a start resource block of the first random access channel occasion, and the M bandwidth resources are the first bandwidth resource; or
when M> 1, each of the M bandwidth resources comprises a resource corresponding to at least one random access channel occasion.

16. The method according to claim 14 or 15, wherein the value of the first parameter is 8, indexes of the random access channel occasions sorted in a first order are 0 to 7, and the first order comprises an ascending order of frequencies.

17. The method according to claim 16, wherein
when the first indication information comprises one bit, the first indication information indicates an index of the first random access channel occasion in indexes {0, 4}; or
when the first indication information comprises two bits, the first indication information indicates an index of the first random access channel occasion in indexes {1, 2, 3, 4}; or
when the first indication information comprises three bits, the first indication information indicates an index of the first random access channel occasion in indexes {0, 1, 2, 3, 4}; or
when the first indication information comprises three bits, the first indication information indicates an index of the first random access channel occasion in indexes {0, 1, 2, 3, 4, 5, 6, 7}; or
when the network device does not send the first indication information, an index of the first random access channel occasion is 0.

18. The method according to any one of claims 14 to 17, wherein the first information indicates the M bandwidth resources; and
a size of each of the M bandwidth resources is predefined; or
when M=2, one bandwidth resource in the bandwidth resources comprises resources of random access channel occasions {0, 1, 2, 3}, and the other bandwidth resource in the bandwidth resources comprises resources of random access channel occasions {4, 5, 6, 7}; or
when M>1, the network device sends first signaling, wherein the first signaling is used to indicate a first candidate bandwidth resource, and remaining (M-1) bandwidth resources are determined based on the first candidate bandwidth resource.

19. The method according to claim 14, wherein when M> 1, the method further comprises:
sending, by the network device, second indication information, wherein the second indication information indicates a second bandwidth resource;
receiving, by the network device, a random access preamble on the first bandwidth resource; and
receiving, by the network device on the second bandwidth resource, a message 3 in a random access process or a physical uplink control channel for feeding back a contention resolution message.

20. The method according to claim 19, wherein the second indication information is carried in one or more of a random access response message, downlink control information for scheduling the random access response message, a contention resolution message, and downlink control information for scheduling the contention resolution message; and/or
the second indication information is carried in an uplink grant of each media access control random access response in a random access response message.

21. The method according to claim 19 or 20, wherein when M> 1, the method further comprises:
receiving, by the network device, the random access preamble on the first bandwidth resource; and
sending, by the network device, third indication information, wherein the third indication information indicates a bandwidth resource for the first terminal device to send the message 3 in the random access process and/or the physical uplink control channel for feeding back the contention resolution message.

22. The method according to claim 21, wherein the method comprises:
when a bit status of the third indication information is a first bit state, receiving, by the network device on the first bandwidth resource, the message 3 in the random access process and/or the physical uplink control channel for feeding back the contention resolution message; or
when a bit status of the third indication information is a second bit state, receiving, by the network device on the second bandwidth resource, the message 3 in the random access process and/or the physical uplink control channel for feeding back the contention resolution message.

23. The method according to claim 1, wherein the method further comprises:
sending, by the network device, fourth indication information, wherein the fourth indication information indicates that an association configuration between an SSB and a random access channel occasion is a first association configuration or a second association configuration, and the association configuration is an association configuration between a quantity of SSBs and a quantity of random access channel occasions.

24. The method according to claim 1, wherein the method further comprises:
if the network device sends fourth indication information, the fourth indication information indicates that an association configuration between an SSB and a random access channel occasion is a first association configuration; or if the network device does not send fourth indication information, an association configuration between an SSB and a random access channel occasion is a second association configuration; or
if the network device sends fourth indication information, the fourth indication information indicates that an association configuration between an SSB and a random access channel occasion is a second association configuration; or if the network device does not send fourth indication information, an association configuration between an SSB and a random access channel occasion is a first association configuration.

25. The method according to any one of claims 14 to 24, wherein the first parameter is carried in random access channel configuration information.

26. The method according to any one of claims 14 to 25, wherein the first information comprises system information.

27. A communication apparatus, comprising a processor, wherein the processor is connected to a memory, the memory is configured to store a computer program, and the processor is configured to execute the computer program stored in the memory, so that the apparatus performs the method according to any one of claims 1 to 13, or performs the method according to any one of claims 14 to 26.

28. A computer-readable storage medium, wherein the computer-readable storage medium is configured to store a computer program, and when the computer program runs on a computer, the computer is enabled to perform the method according to any one of claims 1 to 13, or the computer is enabled to perform the method according to any one of claims 14 to 26.

29. A chip, comprising a processor and a communication interface, wherein the processor is configured to read instructions to perform the method according to any one of claims 1 to 13, or perform the method according to any one of claims 14 to 26.

30. A communication apparatus, comprising modules configured to perform the method according to any one of claims 1 to 13 or claims 14 to 26.

31. A computer program product, wherein the computer program product comprises computer program code, and when the computer program code is run, the method according to any one of claims 1 to 13 or 14 to 26 is implemented.
